# FASCICULE DE BREVET EUROPEEN

(11) **EP 4 256 185 B1**
(45) Date de publication et mention de la délivrance du brevet: **07.01.2026**
(21) Numéro de dépôt: 21811089.8
(22) Date de dépôt: 23.11.2021
(51) Int. Cl.: F02C 6/16, F01D 25/32, F02C 1/04

(54) **SYSTÈME ET PROCÉDÉ DE STOCKAGE ET DE RÉCUPÉRATION D'ÉNERGIE PAR GAZ COMPRIMÉ AVEC RÉCUPÉRATION DE LIQUIDE**
SYSTEM UND VERFAHREN ZUR SPEICHERUNG UND RÜCKGEWINNUNG VON ENERGIE UNTER VERWENDUNG VON DRUCKGAS MIT RÜCKGEWINNUNG VON FLÜSSIGKEIT
SYSTEM AND METHOD FOR STORING AND RECOVERING ENERGY USING COMPRESSED GAS WITH RECOVERY OF LIQUID

(30) Priorité: 03.12.2020 FR 2012637
(43) Date de publication de la demande: 11.10.2023
(73) Titulaire: IFP Energies nouvelles, 92500 Rueil-Malmaison (FR)
(72) Inventeur: TEIXEIRA, David, 92852 RUEIL-MALMAISON CEDEX (FR); MULLER-SHERNETSKY, Elsa, 92852 RUEIL-MALMAISON CEDEX (FR)
(74) Mandataire: IFP Energies nouvelles
(86) Numéro de dépôt international: PCT/EP2021/082604
(87) Numéro de publication internationale: WO 2022/117398

(56) Documents cités:
- WO-A1-2016/012764
- FR-A1- 2 993 925
- FR-A1- 3 074 846
- US-A1- 2016 216 044

## Description

### Domaine technique

La présente invention concerne le domaine du stockage et de la production d'énergie par compression et détente de gaz, notamment de l'air.

Alors que les objectifs énergétiques mondiaux visent à favoriser les énergies renouvelables par rapport aux énergies fossiles et à en augmenter progressivement la proportion dans le mix énergétique, leur caractère variable demeure leur inconvénient majeur. Pour répondre à cette problématique, le stockage d'énergie apparaît comme la solution idéale. En stockant le surplus d'électricité produit au pic de production afin d'en disposer lorsque celle-ci devient inférieure à la demande, le stockage permet de s'affranchir de la contrainte de variabilité et apporte une continuité, ou tout du moins une flexibilité, à la base inexistante, aux énergies renouvelables. Ainsi, le besoin en procédé de stockage d'énergie existe et va aller grandissant avec la proportion de ce type d'énergies dans le mix énergétique mondial.

De nombreuses technologies de stockage matures existent déjà à l'heure actuelle comme les stockages de type mécanique tels que les Stations de Transfert d'Energie par Pompage (STEP) utilisant l'hydroélectricité produite par deux réservoirs d'eau situés à différentes altitudes. En phase de stockage d'électricité, l'eau du réservoir inférieur est pompée vers le réservoir supérieur et stockée à cette altitude. Lorsque la demande en électricité augmente, l'eau du réservoir supérieur est renvoyée vers le réservoir inférieur en passant par une turbine hydraulique qui va alors générer, via un alternateur, de l'électricité. Les barrages hydroélectriques fonctionnent également sur le même concept : le barrage retient l'eau à une altitude plus importante en amont qu'en aval et lorsque la demande en électricité augmente, le barrage libère l'eau en la faisant passer par des turboalternateurs hydrauliques produisant l'électricité. La technologie de stockage d'énergie par air comprimé (CAES de l'anglais « compressed air energy storage ») fait partie des solutions de type mécanique. D'autres technologies de type électrochimique peuvent être également utilisées pour le stockage d'énergie telles que les batteries lithium-ion, plomb-acide ou encore nickel-cadmium, ou bien des batteries à circulation utilisant des électrolytes.

Le stockage d'énergie par air comprimé (CAES) est une technologie mature dont la première installation a été construite en Allemagne fin des années 1970, stockant 290 MW. Le principe du CAES est d'utiliser l'électricité produite et non consommée pour comprimer de l'air. Afin d'éviter tout dommage sur les compresseurs, la chaleur résultant de la compression est évacuée entre chaque étage. L'air comprimé à moyenne ou haute pression (40 bar à 300 bar) est envoyé dans un stockage de type naturel tel qu'une cavité saline, une mine (sel, calcaire, charbon) ou encore dans un stockage artificiel en attendant la phase de décharge de l'énergie. Lors de la phase de production d'électricité, l'air stocké est extrait du stockage afin d'être détendu dans des turboalternateurs. Pour le système CAES de base tel que celui établi à la fin des années 1970, l'air comprimé était utilisé pour alimenter des turbines à gaz (appelées également turbine à combustion). Ces turbines brûlent via une chambre de combustion du gaz naturel en présence d'air comprimé pour produire des gaz de combustion très chauds (500°C-800°C) détendus pour produire l'électricité. Le procédé CAES possède un rendement énergétique de l'ordre de 50%.

### Technique antérieure

Une variante du CAES est le procédé adiabatique ou ACAES (de l'anglais « adiabatic compressed air energy storage »). La différence principale avec le CAES d'origine est que la chaleur résultant de la compression n'est plus évacuée entre chaque étage, mais stockée afin de pouvoir réchauffer l'air en amont des turbines en phase de production d'électricité. Grâce à cette réutilisation de l'énergie thermique interne au procédé, le rendement de l'ACAES atteint environ 70%. Le refroidissement de l'air en phase de compression peut se faire via un échange à contact indirect dans un échangeur de chaleur avec un fluide caloporteur. Le fluide caloporteur chaud est alors stocké et isolé au maximum thermiquement afin de pouvoir céder sa chaleur à l'air lors de la phase de détente. Il peut également être effectué via un échange en contact direct entre l'air et une masse de stockage thermique fonctionnant par chaleur sensible ou grâce à des matériaux à changement de phase. Dans les deux cas, la chaleur issue de l'air va être stockée directement dans la masse, soit au sein du matériau, soit en effectuant un changement de phase du matériau. Lors de la phase de détente, l'air froid est réinjecté dans la masse de stockage thermique et par contact direct, l'air va se réchauffer en captant la chaleur du matériau ou bien permettant le changement de phase inverse libérant cette chaleur. Ce refroidissement de l'air peut alors induire une condensation d'eau si l'air possède une certaine humidité. Cette eau condensée doit alors être extraite du circuit d'air afin de ne pas endommager les compresseurs en aval.

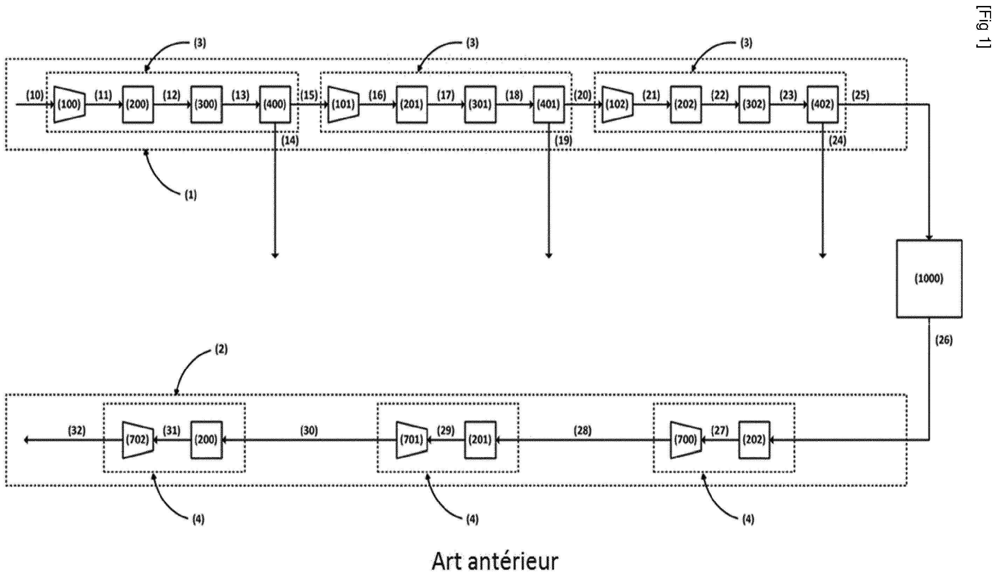

Un première solution pour limiter l'endommagement des compresseurs est d'extraire l'eau de la ligne de compression, au moyen d'un séparateur gaz/liquide prévu à chaque étage de compression. La figure 1 illustre, schématiquement sous la forme de schéma bloc, un tel système et procédé ACAES. Sur cette figure, sont représentées la phase de stockage d'énergie par compression d'un gaz, et la phase de production d'énergie par détente d'un gaz. Le système selon l'art antérieur se compose d'une ligne de compression (1), incluant un ou plusieurs étages de compression (3) en fonction de la pression de l'air à atteindre ainsi que des recommandations des fournisseurs. Dans le mode de réalisation illustré, la ligne de compression (1) comprend trois étages (3) de compression. Chaque étage de compression (3) comporte un moyen de compression (100, 101, 102), appelé également compresseur. Le compresseur (100) est un compresseur basse pression, le compresseur (101) est un compresseur moyenne pression, et le compresseur (102) est un compresseur haute pression. Le gaz utilisé (10) dans le procédé illustré est de l'air ambiant, contenant une saturation en eau liée à sa température et sa pression. Durant la phase de stockage d'énergie, l'air est comprimé dans la ligne de compression (1) puis envoyé dans un moyen de stockage d'air comprimé (1000) adapté aux hautes pressions. Des moyens de stockage et de récupération de la chaleur (200, 201, 202) sont disposés après chaque compresseur (100, 101, 102) de chaque étage de compression (3) afin de refroidir l'air comprimé chaud en sortie de compression tout en stockant cette énergie thermique. Le moyen de stockage et de récupération de la chaleur (200) est adapté à la basse pression, le moyen de stockage et de récupération de la chaleur (201) est adapté à la moyenne pression et le moyen de stockage et de récupération de la chaleur (202) est adapté à la haute pression. Des moyens de refroidissement (300, 301, 302) peuvent être disposés à la suite des moyens de stockage et de récupération de la chaleur (200, 201, 202) si nécessaire afin de finir le refroidissement de l'air comprimé avant le prochain étage de compression ou avant son stockage. Une fois l'air refroidi et avant l'étage de compression suivant, l'eau condensée, issue de l'humidité de l'air, est extraite du flux de compression d'air par des séparateurs gaz-liquide (400, 401, 402) afin d'avoir en entrée de compresseur un air sans aucune trace d'eau liquide. Cette condensation de l'eau peut avoir lieu dans les moyens de stockage et de récupération de la chaleur (200, 201, 202) et/ou dans les moyens de refroidissement (300, 301, 302). Durant la phase de production d'énergie, l'air comprimé est détendu via une ou plusieurs turbines (700, 701, 702) ou étage de détente, selon les recommandations des fournisseurs, afin de produire de l'électricité via des alternateurs, non représentés sur le schéma. La turbine (702) est une turbine basse pression, la turbine (701) est une turbine moyenne pression et la turbine (700) est une turbine haute pression. Pour ce système et ce procédé, l'eau condensée est juste extraite, l'énergie associée est donc perdue.

D'autres systèmes et procédés de stockage et de récupération d'énergie par gaz comprimé envisagent la récupération de l'énergie contenue dans l'eau de condensation.

Par exemple, la demande de brevet FR3074844 (WO2019/115121) divulgue un système et un procédé ACAES amélioré par réinjection des condensats, issus du refroidissement de l'air, dans l'eau servant de fluide caloporteur permettant le stockage de la chaleur extraite de l'air entre chaque étage de compression. Toutefois, ce système et ce procédé sont difficiles à mettre en œuvre en raison des transferts de chaleur entre les différentes température de l'eau. Cette technologie repose sur un échangeur à contact direct en contre-courant entre l'air humide que l'on souhaite refroidir et le fluide caloporteur qui se réchauffe. Lors du refroidissement de l'air, l'humidité apparaît et est transportée par le fluide caloporteur. Ce dernier circulant à contre-courant, l'humidité va rencontrer à nouveau l'air chaud et va donc s'évaporer de nouveau. Il y a accumulation de l'eau dans l'échangeur. En outre, ce système est difficile à mettre en œuvre en raison de la circulation d'un fluide caloporteur, qui nécessite des conduites, des moyens de pompage et des moyens de stockage supplémentaires, ce qui pose également des contraintes d'encombrement.

La demande de brevet WO16012764 dévoile un procédé ACAES dans lequel l'humidité de l'air est condensée en amont du stockage d'air en phase de compression, stockée et réinjectée à l'air en phase de détente en sortie du stockage d'air. Toutefois, ce procédé ne permet pas de protéger les compresseurs des différents étages de compression en limitant l'eau qui les traverse. De plus, cette configuration ne permet pas une optimisation de l'énergie récupérée de l'eau condensée. En outre, ici aussi, ce système est difficile à mettre en œuvre en raison de la circulation d'un fluide caloporteur, qui nécessite des conduites, des moyens de pompage et des moyens de stockage supplémentaires, ce qui pose également des contraintes d'encombrement.

La demande de brevet WO16079485 dévoile un procédé ACAES dans lequel l'humidité de l'air est condensée en amont du stockage d'air en phase de compression, stockée et réinjecté à l'air en phase de détente en sortie du moyen de stockage de l'air. Toutefois, ce procédé ne permet pas de protéger les compresseurs des différents étages de compression en limitant l'eau qui les traverse. De plus, cette configuration ne permet pas une optimisation de l'énergie récupérée de l'eau condensée. En outre, ce système est difficile à mettre en œuvre en raison de la circulation d'un fluide caloporteur, qui nécessite des conduites, des moyens de pompage et des moyens de stockage supplémentaires, ce qui pose également des contraintes d'encombrement. Ce système nécessite également une turbine à combustion en détente, un cycle de Rankine qui produit de l'électricité alors qu'on souhaite stocker de l'énergie. Ainsi de nombreux équipements sont utilisés pour un rendement dégradé. La demande de brevet FR3074846 décrit un procédé de stockage et de production d'énergie par air comprimé avec récupération d'énergie supplémentaire selon l'art antérieur. La demande de brevet FR2993925 décrit un dispositif permettant de stocker et de restituer de l'énergie électrique à grande échelle selon l'art antérieur.

### Résumé de l'invention

La présente invention concerne un système et un procédé de stockage et de récupération d'énergie par gaz comprimé, permettant d'optimisant le rendement du système et du procédé, en limitant l'encombrement du système et en simplifiant le fonctionnement. Pour cela, la présente invention concerne un système et un procédé de stockage et de récupération d'énergie par gaz comprimé, comprenant une ligne de compression, un moyen de stockage d'air, et une ligne de détente. Selon l'invention, la ligne de compression et la ligne de détente comprennent des moyens de stockage de chaleur comprenant des particules de stockage de la chaleur. En outre, la ligne de détente comprend des moyens d'injection et de mélange de liquide dans la ligne de détente. Ainsi, grâce à l'injection de liquide, le débit de gaz est augmenté dans chaque étage de détente, ce qui permet d'augmenter le rendement du système et du procédé. En outre, grâce au stockage de chaleur dans des particules de stockage de chaleur, le système et le procédé sont simples et adaptés (aucun fluide caloporteur n'est utilisé dans les moyens de stockage de la chaleur).

L'invention concerne un système de stockage et de récupération d'énergie par gaz comprimé comprenant :
- Une ligne de compression de gaz avec au moins deux étages de compression successifs, chaque étage de compression comprenant un moyen de compression et un moyen de stockage et de récupération de la chaleur agencé en aval dudit moyen de compression, dans le sens de circulation dudit gaz,
- Au moins un moyen de stockage de gaz comprimé agencé en sortie de ladite ligne de compression de gaz pour stocker ledit gaz comprimé,
- Une ligne de détente de gaz pour détendre ledit gaz comprimé stocké dans ledit moyen de stockage de gaz comprimé, ladite ligne de détente de gaz comprenant au moins deux étages de détente successifs, chaque étage de détente comportant un moyen de détente et des conduites configurées pour faire circuler ledit gaz comprimé dans au moins un desdits moyens de stockage et de récupération de la chaleur desdits étages de compression de manière à réchauffer ledit gaz comprimé,
Lesdits moyens de stockage et de récupération de la chaleur comprennent des particules de stockage de la chaleur pour un échange de chaleur direct entre le gaz et le matériau des particules de stockage de la chaleur, les particules restant dans le moyen de stockage et de récupération de la chaleur, et en ce que chaque étage de détente comprend un moyen d'introduction d'un liquide, lesdits moyens d'introduction dudit liquide étant prévus en amont, dans le sens de circulation dudit gaz, desdits moyens de stockage de la chaleur.

Selon un mode de réalisation, chaque étage de compression comprend un moyen de séparation dudit gaz et d'un liquide.

Avantageusement, pour chaque étage de compression, ledit moyen de séparation de gaz et de liquide est agencé en aval dudit moyen de stockage et de récupération de la chaleur, dans le sens de circulation dudit gaz.

De préférence, ledit système comprend une pluralité de moyens de stockage de liquide pour stocker ledit liquide en sortie desdits moyens de séparation de gaz et de liquide, et en ce que lesdits moyens introduction introduisent ledit liquide desdits moyens de stockage de liquide.

Selon une option de réalisation, ladite ligne de compression comprend autant d'étages de compression que la ligne de détente comprend d'étages de détente, chaque moyen de stockage et de récupération de la chaleur d'un étage de compression étant utilisé dans l'étage de détente correspondante.

De manière avantageuse, ladite ligne de compression et ladite ligne de détente comportent respectivement trois étages.

Conformément à un mode de réalisation, au moins un étage de compression comprend un moyen de refroidissement en aval du moyen de stockage et de récupération de la chaleur, dans le sens de circulation dudit gaz, de préférence, ledit moyen de refroidissement comprend un aéro-réfrigérant.

Selon un aspect, ladite ligne de détente comprend au moins un moyen d'échange de chaleur complémentaire entre le gaz en sortie de ladite ligne de détente et ledit gaz comprimé.

Selon une caractéristique, ledit au moins un moyen d'échange de chaleur complémentaire est agencé dans le premier étage de détente, dans le sens de circulation dudit gaz.

Avantageusement, ladite ligne de détente comporte deux moyens d'échange de chaleur complémentaires agencés dans deux étages de détente.

Conformément à une mise en œuvre, ledit au moins un moyen d'échange de chaleur complémentaire est agencé entre ledit moyen d'introduction dudit liquide et ledit moyen de stockage et de récupération de la chaleur, dans le sens de circulation dudit gaz.

En outre, l'invention concerne un procédé de stockage et de récupération d'énergie par gaz comprimé comprenant au moins les étapes suivantes :
- En phase de stockage d'énergie :
   a) on comprime successivement au moins deux fois un gaz dans une ligne de compression comprenant au moins deux étages de compression, chaque étage de compression comprenant au moins un moyen de compression ;
   b) après chaque étape de compression, on récupère la chaleur dudit gaz comprimé dans au moins un moyen de stockage et de récupération de la chaleur;
   c) on stocke ledit gaz comprimé refroidi dans au moins un moyen de stockage de gaz comprimé ;
- En phase de récupération d'énergie :
   d) on fait circuler le gaz comprimé sortant du moyen de stockage de gaz comprimé dans un ligne de détente comprenant au moins deux étages de détente successifs, et dans chaque étage de détente, on réchauffe le gaz comprimé en le faisant circuler dans un desdits moyens de stockage et de récupération de la chaleur grâce à la chaleur stockée lors de l'étape de compression puis on détend le gaz comprimé réchauffé dans un moyen de détente ;
   pour ce procédé, on stocke la chaleur dans des particules de stockage de la chaleur pour un échange de chaleur direct entre le gaz et le matériau des particules de stockage de la chaleur, les particules restant dans le moyen de stockage et de récupération de la chaleur,
   et en ce qu'avant chaque étape de détente, on introduit un liquide dans ledit gaz comprimé avant l'étape de réchauffage dudit gaz.

Selon un mode de réalisation, après chaque étape de compression, on sépare ledit gaz et un liquide présent dans ledit gaz.

Avantageusement, on stocke ledit liquide séparé, et ledit liquide introduit dans ledit gaz comprimé est ledit liquide stocké.

Conformément à une mise en œuvre, on réalise autant d'étapes de compression que d'étapes de détente, et on utilise le moyen de stockage et de récupération de la chaleur de chacune des étapes b) pour réchauffer le gaz comprimé de l'étape de détente correspondante.

Selon un aspect, après chaque étape de récupération de la chaleur, on refroidit le gaz comprimé en sortie du moyen de stockage et de récupération de la chaleur dans un moyen de refroidissement avant que le gaz ne soit envoyé dans l'étape de compression suivante ou dans le moyen de stockage de gaz comprimé.

Selon une caractéristique, avant au moins une étape de détente, on réchauffe ledit gaz par au moins un échange de chaleur complémentaire avec ledit gaz en sortie de ladite ligne de détente.

De manière avantageuse, ledit au moins un échange de chaleur complémentaire est mis en œuvre pour la première étape de détente, dans le sens de circulation dudit gaz.

Selon une mise en œuvre, on met en œuvre deux échanges de chaleur complémentaires pour deux étapes de détente.

Selon un mode de réalisation, on met en œuvre ledit échange de chaleur complémentaire après l'étape d'introduction dudit liquide stocké dans ledit gaz comprimé.

D'autres caractéristiques et avantages du système et du procédé selon l'invention, apparaîtront à la lecture de la description ci-après d'exemples non limitatifs de réalisations, en se référant aux figures annexées et décrites ci-après.

### Liste des figures

La figure 1, déjà décrite, illustre un système et un procédé de stockage et de récupération d'énergie par gaz comprimé selon l'art antérieur.
La figure 2 illustre un système et un procédé de stockage et de récupération d'énergie par gaz comprimé selon un premier mode de réalisation de l'invention.
La figure 3 illustre un système et un procédé de stockage et de récupération d'énergie par gaz comprimé selon un deuxième mode de réalisation de l'invention.
La figure 4 illustre un système et un procédé de stockage et de récupération d'énergie par gaz comprimé selon un troisième mode de réalisation de l'invention.
La figure 5 illustre un système et un procédé de stockage et de récupération d'énergie par gaz comprimé selon un quatrième mode de réalisation de l'invention.
La figure 6 illustre un système et un procédé de stockage et de récupération d'énergie par gaz comprimé selon un cinquième mode de réalisation de l'invention.
La figure 7 illustre un système et un procédé de stockage et de récupération d'énergie par gaz comprimé selon un sixième mode de réalisation de l'invention.
La figure 8 illustre un système et un procédé de stockage et de récupération d'énergie par gaz comprimé selon un septième mode de réalisation de l'invention.

### Description des modes de réalisation

La présente invention concerne un système et un procédé de stockage et de récupération d'énergie par gaz comprimé.

Dans la présente invention les termes « amont », « aval », « en entrée », « en sortie », « avant », « après » sont définis par le sens de circulation du gaz, respectivement pendant la phase de stockage d'énergie (phase de compression), et pendant la phase de récupération d'énergie (phase de détente).

Le système selon l'invention comprend :
- une ligne de compression (on appelle « ligne de compression », la ligne de gaz allant de l'entrée de gaz jusqu'au moyen de stockage de gaz comprimé passant par au moins deux moyens de compression), avec au moins deux étages de compression successifs (en série), chaque étage de compression comprend :
   - un moyen de compression du gaz (compresseur), permettant d'augmenter la pression du gaz, en vue de son stockage, les moyens de compression peuvent être des compresseurs axiaux, centrifuges, ou de toute autre technologie,
   - un moyen de stockage et de récupération de la chaleur agencé en aval du moyen de compression, afin de stocker la chaleur générée par la compression, et de diminuer la température du gaz avant l'étage de compression suivant ou avant le moyen de stockage de gaz comprimé,
- au moins un moyen de stockage du gaz comprimé, pour stocker le gaz comprimé en sortie de la ligne de compression afin de le réutiliser ultérieurement, le moyen de stockage du gaz comprimé peut être une cavité naturelle telle qu'une cavité saline, une ancienne mine ou un aquifère ou encore un stockage artificiel ;
- une ligne de détente de gaz (on appelle « ligne de détente », la ligne de gaz allant du moyen de stockage du gaz comprimé à la sortie du gaz en passant par au moins un moyen de détente) avec au moins deux étages de détente successifs (en série), chaque étage de détente comprend :
   - au moins un moyen de détente du gaz comprimé pour générer une énergie, par exemple une turbine pouvant être couplée à un alternateur,
   - des conduites pour faire circuler le gaz dans un des moyens de stockage de la ligne de compression, de manière à récupérer la chaleur stockée et d'augmenter la température du gaz pour augmenter l'énergie produite dans le moyen de détente.

Selon l'invention, les moyens de stockage et de récupération de la chaleur comprennent des particules de stockage de la chaleur. Ainsi, l'échange de chaleur est réalisé par échange direct entre le gaz et un matériau, le matériau restant dans le moyen de stockage et de récupération de la chaleur. En d'autres termes, il n'y pas de circulation des particules de stockage de la chaleur. Par conséquent, il n'est pas nécessaire d'avoir un système dédié qui comporte des réservoirs de stockage d'un fluide caloporteur, des moyens de pompage, et des conduites dédiées. Par exemple, le matériau peut être des pierres, du béton, des graviers, des billes de matériau à changement de phase (MCP) éventuellement encapsulés, de préférence avec un changement de phase solide-liquide, zéolites, ou tout matériau analogue.

De plus, chaque étage de détente comporte un moyen d'introduction d'un liquide. Le moyen d'introduction du liquide permet le mélange entre le gaz de la ligne de détente et le liquide. Ainsi, grâce à la l'injection de l'eau, le débit de gaz est augmenté dans chaque étage de détente, ce qui permet d'augmenter le rendement du système et du procédé. Les moyens d'introduction et de mélange du liquide sont prévus dans la ligne de détente en amont des moyens de stockage de chaleur, de cette manière, le mélange eau et liquide réinjecté est réchauffé dans le moyen de stockage de la chaleur, ce qui permet de vaporiser le liquide, et de cette manière seul un gaz est conduit dans le moyen de détente.

Conformément à un mode de réalisation de l'invention, le gaz peut être de l'air. Il peut s'agir de l'air prélevé dans le milieu ambiant. En variante, il peut comporter d'autres gaz.

Selon un aspect de l'invention, le liquide est de l'eau. Il peut s'agir notamment de l'humidité présente dans le gaz, en particulier quand le gaz est de l'air. En variante, il peut comporter d'autres liquides.

Selon un mode de réalisation, chaque étage de compression peut comprendre un moyen de séparation gaz/liquide, qui permet d'extraire le liquide présent dans le gaz, notamment en raison de la condensation de l'eau présente dans le gaz, et permettant d'éliminer les traces de liquide qui pourraient être contenues dans le gaz après son refroidissement et qui pourraient endommager le système, notamment les moyens de compression.

De plus, le système et le procédé peut comprendre des moyens de stockage de liquide, afin de stocker le liquide extrait de la ligne de compression. Par exemple, il peut être prévu un moyen de stockage de liquide par étage de compression (donc par moyen de séparation gaz liquide). Ainsi, on peut stocker le liquide à différentes pressions. De manière avantageuse, les moyens d'introduction du liquide peuvent permettre l'introduction du liquide sortant du moyen de stockage de liquide, rendant ainsi possible l'utilisation de liquide récupéré de condensation, dans la ligne de compression.

Selon un mode de réalisation de l'invention, le moyen de séparation gaz/liquide peut être agencé en aval du moyen de stockage et de récupération de la chaleur. De cette manière, il est possible d'extraire le liquide formé par condensation dans le moyen de stockage et de récupération de la chaleur.

Alternativement, le moyen de séparation gaz/liquide peut être agencé en amont du moyen de compression, ou entre le moyen de compression et le moyen de stockage et de récupération de la chaleur.

Avantageusement, la ligne de compression et la ligne de détente peuvent comprendre autant d'étages. En d'autres termes, le nombre d'étages de compression et le nombre d'étages de détente peuvent être identiques. Cette réalisation permet une conception « symétrique » des lignes de compression et de détente, avec notamment des pressions et des températures de fonctionnement similaires, ce qui favorise les échanges de chaleur dans les moyens de stockage et de récupération de la chaleur, et ce qui permet une réinjection du liquide dans un étage de détente qui correspond à l'étage de compression correspondant. Ainsi, le système et le procédé sont simplifiés.

Pour ce mode de réalisation, le nombre d'étages de compression et de détente peut être compris entre deux et six, préférentiellement compris entre trois et cinq. Par exemple, le nombre d'étages de compression et de détente peut valoir trois, ce qui permet une bonne gestion des températures et des pressions, tout en conservant une conception simple.

En variante, le nombre d'étages de compression et le nombre d'étages de détente peuvent être différents. Pour cette réalisation, il peut être prévu de mutualiser au moins une partie des moyens de stockage et de récupération de la chaleur, ainsi qu'au moins une partie des moyens d'introduction du liquide.

De plus, au moins un étage de compression peut comprendre un moyen de refroidissement. Ce moyen de refroidissement peut être agencé en aval du moyen de stockage et de récupération de la chaleur. Ce moyen de refroidissement permet de refroidir de manière plus importante le gaz, ce qui permet de réduire les dimensions des moyens de stockage et de récupération de la chaleur. Ces moyens de refroidissement de chaleur peuvent être des aéro-réfrigérants ou des échangeurs de chaleur (tubes/calandre, à plaques, spiralés ou autres technologies adaptées) échangeant avec un fluide caloporteur pouvant être de l'eau, du propane, du butane ou tout autre réfrigérant adapté au refroidissement nécessaire. Les moyens de refroidissement peuvent être adaptés à la pression de l'air entrant et échangeant avec chacun d'entre eux. Les moyens de refroidissement n'interviennent pas dans la phase de récupération d'énergie.

Pour ce mode de réalisation, le moyen de séparation gaz/liquide peut être agencé en aval du moyen de refroidissement. De cette manière, il est possible d'extraire le liquide formé par condensation dans le moyen de stockage et de récupération de la chaleur ainsi que dans le moyen de refroidissement.

Selon un mode de réalisation, la ligne de détente peut comporter au moins un moyen d'échange de chaleur complémentaire, entre le gaz en sortie de la ligne de détente et le gaz comprimé. Ainsi, le gaz chaud en sortie de la ligne de détente est refroidi, alors que le gaz comprimé dans la ligne de détente peut être réchauffé. De cette manière, on peut récupérer de l'énergie thermique perdue, et ainsi diminuer les besoins de chauffage du gaz comprimé, ce qui permet de diminuer les dimensions d'au moins un moyen de stockage et de récupération de la chaleur (et par conséquent le coût des moyens de stockage et de récupération de la chaleur).

Conformément à une mise en œuvre de ce mode de réalisation, le moyen d'échange de chaleur complémentaire peut être agencé dans le premier étage de détente. On appelle « premier étage de détente », le premier étage de détente traversé par le gaz dans la ligne de détente. En d'autres termes, le premier étage de détente est voisin du moyen de stockage de gaz comprimé. Ainsi, la chaleur du gaz en sortie de la ligne de détente est utilisée pour réchauffer le gaz le plus frais en sortie du moyen de stockage de compression, ce qui permet de diminuer les dimensions du moyen de stockage et de récupération de la chaleur du premier étage de détente, qui est le moyen de stockage et de récupération de la chaleur qui possède les contraintes de pression les plus élevées, par conséquent, il s'agit du moyen de stockage et de récupération de la chaleur le plus onéreux.

En variante, le moyen d'échange de chaleur complémentaire peut être agencé dans un étage de détente compris entre le premier et le dernier étage de détente.

Selon un aspect de ce mode de réalisation, la ligne de détente peut comprendre deux moyens d'échange de chaleur complémentaires, qui sont agencés dans deux étages de détente différents. De cette manière, il est possible de réduire les dimensions de deux moyens de stockage et de récupération de la chaleur. Pour cette réalisation, les deux moyens d'échange de chaleur complémentaires peuvent être traversés en série par le gaz en sortie de la ligne de détente. De préférence, les deux moyens d'échange de chaleur complémentaires peuvent être agencés dans les deux premiers étages de détente. Ainsi, la chaleur du gaz en sortie de la ligne de détente est utilisée pour réchauffer le gaz le plus frais en sortie du moyen de stockage de compression et en sortie du premier étage de détente, ce qui permet de diminuer les dimensions des moyens de stockage et de récupération de la chaleur des deux premiers étages de détente, qui sont les moyens de stockage et de récupération de la chaleur qui possèdent les contraintes de pression les plus élevées, par conséquent, il s'agit des moyens de stockage et de récupération de la chaleur les plus onéreux. Pour cette réalisation de l'invention, le gaz en sortie de la ligne de détente peut traverser d'abord le moyen d'échange de la chaleur complémentaire du deuxième étage de détente, puis le moyen d'échange de la chaleur complémentaire du premier étage de détente.

De manière avantageuse, le moyen d'échange de chaleur complémentaire peut être agencé entre le moyen d'introduction du liquide et le moyen de stockage et de récupération de la chaleur. De cette manière, le moyen d'échange de chaleur complémentaire peut réchauffer le mélange gaz et liquide, favorisant la vaporisation du liquide.

En variante, le moyen d'échange de chaleur complémentaire peut être agencé avant le moyen d'introduction du liquide, ou être agencé entre le moyen de stockage et de récupération de la chaleur et le moyen de détente.

En outre, l'invention concerne un procédé de stockage et de récupération d'énergie par gaz comprimé.

Le procédé selon l'invention met en œuvre les étapes suivantes :
- En phase de stockage d'énergie (phase de compression) :
   a) on comprime successivement au moins deux fois un gaz dans une ligne de compression comprenant au moins deux étages de compression, chaque étage de compression comprenant au moins un moyen de compression ;
   b) après chaque étape de compression, on récupère la chaleur du gaz comprimé dans au moins un moyen de stockage et de récupération de la chaleur, ;
   c) on stocke le gaz comprimé refroidi en sortie de la ligne de compression dans un moyen de stockage de gaz comprimé ;
- En phase de récupération d'énergie (phase de détente) :
   d) on fait circuler le gaz comprimé sortant du moyen de stockage de gaz comprimé dans une ligne de détente comprenant au moins deux étages de détente successifs, et dans chaque étage de détente, on réchauffe le gaz comprimé en le faisant circuler dans un des moyens de stockage et de récupération de la chaleur grâce à la chaleur stockée lors de l'étape de compression puis on détend le gaz comprimé réchauffé dans un moyen de détente.

De plus, selon l'invention, on stocke et on récupère la chaleur dans des particules de stockage de la chaleur. En d'autres termes, les moyens de stockage et de récupération de la chaleur comprennent des particules de stockage de la chaleur. Ainsi, l'échange de chaleur est réalisé par échange direct entre le gaz et un matériau, le matériau restant dans le moyen de stockage et de récupération de la chaleur. En d'autres termes, il n'y pas de circulation des particules de stockage de la chaleur. Par conséquent, il n'est pas nécessaire d'avoir un système dédié qui comporte des réservoirs de stockage d'un fluide caloporteur, des moyens de pompage, et des conduites dédiées. Par exemple, le matériau peut être des pierres, du béton, des graviers, des billes de matériau à changement de phase (MCP), zéolites, ou tout matériau analogue.

De plus, avant chaque étape de détente, on introduit et on mélange un liquide dans le gaz comprimé avant l'étape de réchauffage du gaz. Dans ce but, chaque étage de détente comporte un moyen d'introduction et de mélange du liquide, rendant ainsi possible l'utilisation du liquide récupéré de condensation, dans la ligne de compression. Ainsi, grâce à l'injection de liquide, le débit de gaz est augmenté dans chaque étage de détente, ce qui permet d'augmenter le rendement du système et du procédé. Les moyens d'introduction et de mélange du liquide sont prévus dans la ligne de détente en amont des moyens de stockage de chaleur, de cette manière, le mélange eau et liquide injecté est réchauffé dans le moyen de stockage de la chaleur, ce qui permet de vaporiser le liquide, et de cette manière seul un gaz est conduit dans le moyen de détente.

De préférence, le procédé de stockage et de récupération d'énergie par gaz comprimé peut mettre en œuvre le système de stockage et de récupération d'énergie par gaz comprimé selon l'une quelconque des variantes ou des combinaisons de variantes telles que décrites ci-dessus.

Conformément à un mode de réalisation de l'invention, le gaz peut être de l'air. Il peut s'agir de l'air prélevé dans le milieu ambiant.

Selon un aspect de l'invention, le liquide peut être de l'eau. Il peut s'agir notamment de l'humidité présente dans le gaz, en particulier quand le gaz est de l'air.

Selon un mode de réalisation de l'invention, après chaque étape de compression, on peut séparer le gaz et un liquide présent dans le gaz.

En outre, le procédé peut comprendre une étape de stockage de liquide, afin de stocker le liquide extrait de la ligne de compression. Par exemple, il peut être prévu un moyen de stockage de liquide par étape de compression (donc par étape de séparation gaz liquide). Ainsi, on peut stocker le liquide à différentes pressions. De manière avantageuse, le liquide introduit dans le gaz est le liquide issu de l'étape de stockage, rendant ainsi possible l'utilisation de liquide récupéré de condensation, dans la ligne de compression.

Selon un mode de réalisation de l'invention, l'étape de séparation gaz/liquide peut être réalisée après l'étape de stockage de la chaleur. De cette manière, il est possible d'extraire le liquide formé par condensation dans le moyen de stockage et de récupération de la chaleur.

Avantageusement, on peut réaliser autant d'étapes de compression que d'étapes de détente. Dans ce cas, la ligne de compression et la ligne de détente peuvent comprendre autant d'étages. En d'autres termes, le nombre d'étapes de compression et le nombre d'étapes de détente peuvent être identiques. Cette réalisation permet une conception « symétrique » des lignes de compression et de détente, avec notamment des pressions et des températures de fonctionnement similaires, ce qui favorise les échanges de chaleur dans les moyens de stockage et de récupération de la chaleur, et ce qui permet une réinjection du liquide dans un étage de détente qui correspond à l'étage de compression correspondant. Ainsi, le système et le procédé sont simplifiés.

Pour ce mode de réalisation, le nombre d'étapes de compression et de détente peut être compris entre deux et six, préférentiellement compris entre trois et cinq. Par exemple, le nombre d'étapes de compression et de détente peut valoir trois, ce qui permet une bonne gestion des températures et des pressions, tout en conservant une conception simple.

En variante, le nombre d'étapes de compression et le nombre d'étages de détente peuvent être différents. Pour cette réalisation, il peut être prévu de mutualiser au moins une partie des moyens de stockage et de récupération de la chaleur, ainsi qu'au moins une partie des moyens d'introduction du liquide.

De plus, la phase de stockage d'énergie peut comprendre une étape de refroidissement. Cette étape de refroidissement peut être réalisée après l'étape de stockage de la chaleur par un moyen de refroidissement. Cette étape de refroidissement permet de refroidir de manière plus importante le gaz, ce qui permet de réduire les dimensions des moyens de stockage et de récupération de la chaleur. Ces moyens de refroidissement peuvent être des aéro-réfrigérants ou des échangeurs de chaleur (tubes/calandre, à plaques, spiralés ou autres technologies adaptées) échangeant avec un fluide caloporteur pouvant être de l'eau, du propane, du butane ou tout autre réfrigérant adapté au refroidissement nécessaire. Les moyens de refroidissement peuvent être adaptés à la pression de l'air entrant et échangeant avec chacun d'entre eux.

Pour ce mode de réalisation, l'étape de séparation gaz/liquide peut être réalisée après l'étape de refroidissement. De cette manière, il est possible d'extraire le liquide formé par condensation dans le moyen de stockage et de récupération de la chaleur ainsi que dans l'étape de refroidissement.

Selon un mode de réalisation, la phase de récupération d'énergie peut comporter au moins une étape d'échange de chaleur complémentaire, entre le gaz en sortie de la ligne de détente et le gaz comprimé. Ainsi, le gaz chaud en sortie de la ligne de détente est refroidi, alors que le gaz comprimé dans la ligne de détente peut être réchauffé. De cette manière, on peut récupérer de l'énergie thermique perdue, et ainsi diminuer les besoins de chauffage du gaz comprimé, ce qui permet de diminuer les dimensions d'au moins un moyen de stockage et de récupération de la chaleur (et par conséquent le coût des moyens de stockage et de récupération de la chaleur).

Conformément à une mise en œuvre de ce mode de réalisation, l'échange de chaleur complémentaire peut être agencé pour la première étape de détente (dans le premier étage de détente). On appelle « première étape de détente », la première étape de détente traversée par le gaz dans la ligne de détente. En d'autres termes, la première étape de détente est l'étape successive de l'étape de stockage de gaz comprimé. Ainsi, la chaleur du gaz en sortie de la ligne de détente est utilisée pour réchauffer le gaz le plus frais en sortie du moyen de stockage de compression, ce qui permet de diminuer les dimensions du moyen de stockage et de récupération de la chaleur du premier étage de détente, qui est le moyen de stockage et de récupération de la chaleur qui possède les contraintes de pression les plus élevées, par conséquent, il s'agit du moyen de stockage et de récupération de la chaleur le plus onéreux.

En variante, l'échange de chaleur complémentaire peut être réalisée dans une étape de détente mise en œuvre entre la première et la dernière étape de détente.

Selon un aspect de ce mode de réalisation, la phase de récupération d'énergie peut comprendre deux échanges de chaleur complémentaires, qui sont réalisés dans deux étapes de détente différentes. De cette manière, il est possible de réduire les dimensions de deux moyens de stockage et de récupération de la chaleur. Pour cette réalisation, les deux échanges de chaleur complémentaires peuvent être traversés en série par le gaz en sortie de la ligne de détente. De préférence, les deux échanges de chaleur complémentaires peuvent être agencés dans les deux premières étapes de détente. Ainsi, la chaleur du gaz en sortie de la ligne de détente est utilisée pour réchauffer le gaz le plus frais en sortie du moyen de stockage de compression et en sortie du premier étage de détente, ce qui permet de diminuer les dimensions des moyens de stockage et de récupération de la chaleur des deux premiers étages de détente, qui sont les moyens de stockage et de récupération de la chaleur qui possèdent les contraintes de pression les plus élevées, par conséquent, il s'agit des moyens de stockage et de récupération de la chaleur les plus onéreux. Pour cette réalisation de l'invention, le gaz en sortie de la ligne de détente peut traverser d'abord le moyen d'échange de la chaleur complémentaire du deuxième étage de détente, puis le moyen d'échange de la chaleur complémentaire du premier étage de détente.

De manière avantageuse, l'échange de chaleur complémentaire peut être réalisé entre l'étape d'introduction du liquide et l'étape de récupération de la chaleur du moyen de stockage et de récupération de la chaleur. De cette manière, l'échange de chaleur complémentaire peut réchauffer le mélange gaz et liquide, favorisant la vaporisation du liquide.

En variante, l'échange de chaleur complémentaire peut être mis en œuvre avant l'étape d'introduction du liquide.

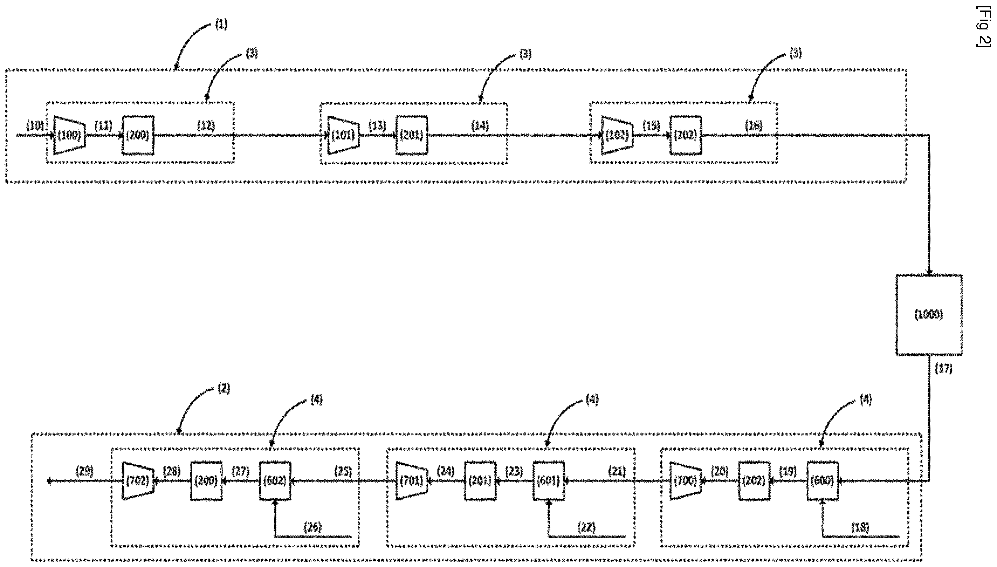

La figure 2 illustre, schématiquement et de manière non limitative, un système et un procédé de stockage et de récupération d'énergie par gaz comprimé (en l'occurrence l'air) selon un premier mode de réalisation de l'invention. Selon ce premier mode de réalisation, le procédé et le système se composent d'une ligne de compression (1), incluant trois étages de compression (3) en fonction de la pression de l'air à atteindre. Chaque étage de compression (3) comprend un moyen de compression (100, 101, 102) appelé aussi compresseur. Ces compresseurs (100, 101, 102) peuvent être axiaux, centrifuges, ou de tout autre technologie. Le compresseur (100) est un compresseur basse pression, le compresseur (101) est un compresseur moyenne pression et le compresseur (102) est un compresseur haute pression. Le gaz utilisé (10) dans le système et le procédé est de l'air ambiant, contenant une saturation en eau liée à sa température et sa pression. On appelle élément (par exemple turbine, compresseur, etc.) basse pression un élément adapté à la basse pression dans laquelle le gaz ou le liquide circule dans l'élément, élément moyenne pression un élément adapté à la moyenne pression dans laquelle le gaz ou le liquide circule dans l'élément, et élément haute pression un élément adapté à la haute pression dans laquelle le gaz ou le liquide circule dans l'élément.

Durant la phase de stockage d'énergie (1), l'air est comprimé dans la ligne de compression (1) puis envoyé dans un moyen de stockage d'air comprimé (1000) adapté aux hautes pressions. Ce moyen de stockage d'air comprimé (1000) peut être une cavité naturelle telle qu'une cavité saline, une ancienne mine ou un aquifère ou encore un stockage artificiel.

Des moyens de stockage et de récupération de la chaleur (200, 201, 202) sont disposés après chaque compresseur (100, 101, 102) afin de refroidir l'air comprimé chaud en sortie de compression tout en stockant cette énergie thermique. L'échange/stockage s'effectue par contact direct entre l'air et le matériau permettant de stocker la chaleur de l'air. Ce matériau peut être des pierres, du béton, des graviers ou tout autre matériaux solides adaptés. Les moyens de stockage et de récupération de la chaleur (200, 201, 202) sont adaptés à la pression de l'air entrant cédant son énergie à chacun d'entre eux. Le moyen de stockage et de récupération de la chaleur (200) est adapté à la basse pression, le moyen de stockage et de récupération de la chaleur (201) est adapté à la moyenne pression, et le moyen de stockage et de récupération de la chaleur (202) est adapté à la haute pression.

Durant la phase de production d'énergie, l'air comprimé traverse la ligne de détente (2), qui comporte trois étages de détente (4). L'air est détendu via un ou plusieurs moyens de détente, par exemple des turbines (700, 701, 702), placés dans chaque étage de détente (4), afin de produire de l'électricité via des alternateurs, non représentés. La turbine (702) est une turbine basse pression, la turbine (701) est une turbine moyenne pression, et la turbine (700) est une turbine haute pression.

En première étape de chaque étage de détente (4), de l'eau condensée est injectée à l'air comprimé via des mélangeurs (600, 601, 602). Le mélange air comprimé/eau est réchauffé, avant l'entrée dans la turbine, par les moyens de stockage et de récupération de la chaleur (200, 201, 202), chargés thermiquement lors de la phase de compression précédente (1). L'eau condensée injectée à chaque étage de détente (4) est évaporée et l'air réchauffé. Il n'y a donc pas d'eau liquide en entrée de turbines (700, 701, 702), ce qui est préférable pour le bon fonctionnement de celles-ci. De plus, le débit de passage plus important dû à la réinjection d'eau et la température élevée en entrée des turbines (700, 701, 702) assure un meilleur rendement du procédé.

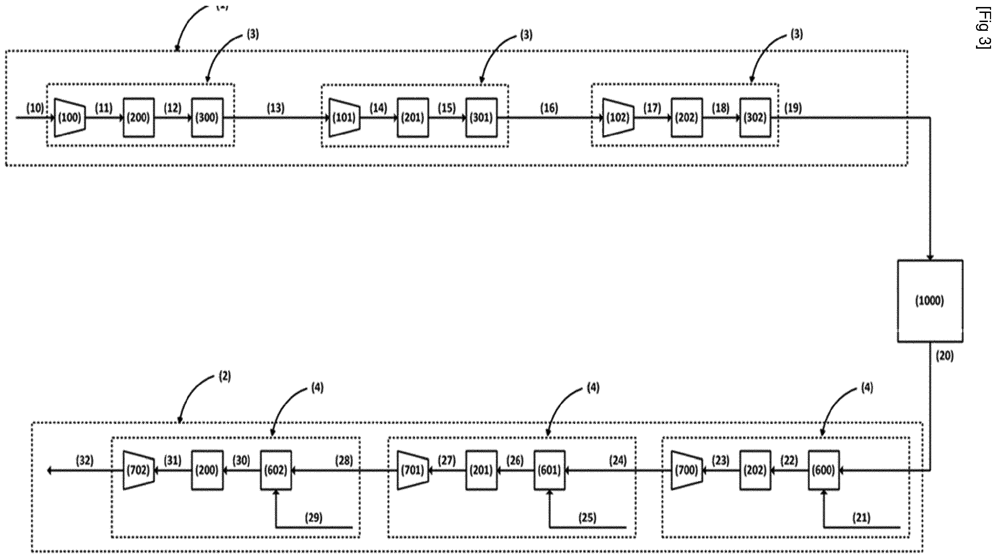

La figure 3 illustre, schématiquement et de manière non limitative, un système et un procédé de stockage et de récupération d'énergie par gaz comprimé (en l'occurrence l'air) selon un deuxième mode de réalisation de l'invention. Le deuxième mode de réalisation correspond au premier mode de réalisation pour lequel des moyens de refroidissement (300, 301, 302) ont été ajoutés dans la ligne de compression (1). Par conséquent, seule la ligne de compression (1) est décrite pour ce mode de réalisation.

Chaque étage de compression (3) comprend un moyen de compression (100, 101, 102) appelé aussi compresseur. Ces compresseurs (100, 101, 102) peuvent être axiaux, centrifuges, ou de tout autre technologie. Le compresseur (100) est un compresseur basse pression, le compresseur (101) est un compresseur moyenne pression et le compresseur (102) est un compresseur haute pression. Le gaz utilisé (10) dans le système et le procédé est de l'air ambiant, contenant une saturation en eau liée à sa température et sa pression.

Durant la phase de stockage d'énergie (1), l'air est comprimé dans la ligne de compression puis envoyé dans un moyen de stockage d'air comprimé (1000) adapté aux hautes pressions. Ce moyen de stockage d'air comprimé (1000) peut être une cavité naturelle telle qu'une cavité saline, une ancienne mine ou un aquifère ou encore un stockage artificiel.

Des moyens de stockage et de récupération de la chaleur (200, 201, 202) sont disposés après chaque compresseur (100, 101, 102) afin de refroidir l'air comprimé chaud en sortie de compression tout en stockant cette énergie thermique. L'échange/stockage s'effectue par contact direct entre l'air et le matériau permettant de stocker la chaleur de l'air. Ce matériau peut être des pierres, du béton, des graviers ou tout autre matériaux solides adaptés. Les moyens de stockage et de récupération de la chaleur (200, 201, 202) sont adaptés à la pression de l'air entrant cédant son énergie à chacun d'entre eux. Le moyen de stockage et de récupération de la chaleur (200) est adapté à la basse pression, le moyen de stockage et de récupération de la chaleur (201) est adapté à la moyenne pression, et le moyen de stockage et de récupération de la chaleur (202) est adapté à la haute pression. Des moyens de refroidissement (300, 301, 302) peuvent être disposés à la suite des moyens de stockage et de récupération de la chaleur (200, 201, 202) si nécessaire afin de finir le refroidissement de l'air comprimé avant le prochain étage de compression ou avant son stockage. Ces moyens de refroidissement (300, 301, 302) peuvent être des aéro-réfrigérants ou des échangeurs de chaleur (tubes/calandre, à plaques, spiralés ou autres technologies adaptées) échangeant avec un fluide caloporteur pouvant être de l'eau, du propane, du butane ou tout autre réfrigérant adapté au refroidissement nécessaire. Les moyens de refroidissement (300, 301, 302) sont adaptés à la pression de l'air entrant et échangeant avec chacun d'entre eux. Le moyen de refroidissement (300) est adapté à la basse pression, le moyen de refroidissement (301) est adapté à la moyenne pression et le moyen de refroidissement (302) est adapté à la haute pression.

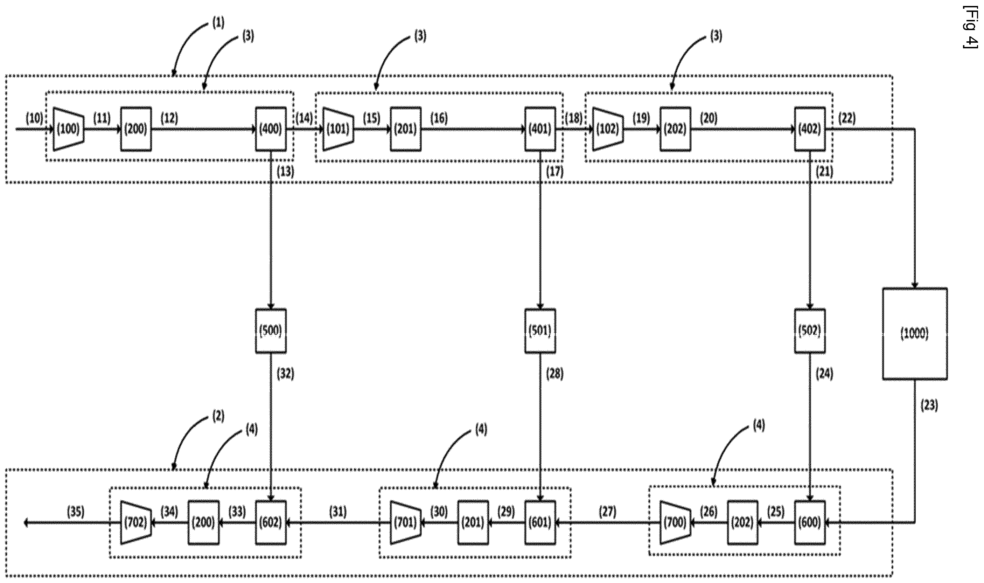

La figure 4 illustre, schématiquement et de manière non limitative, un système et un procédé de stockage et de récupération d'énergie par gaz comprimé (en l'occurrence l'air) selon un troisième mode de réalisation de l'invention. Selon le troisième mode de réalisation, le procédé et le système se composent d'une ligne de compression, incluant trois étages de compression (3) en fonction de la pression de l'air à atteindre. Chaque étage de compression (3) comprend un moyen de compression (100, 101, 102) appelé aussi compresseur. Ces compresseurs (100, 101, 102) peuvent être axiaux, centrifuges, ou de tout autre technologie. Le compresseur (100) est un compresseur basse pression, le compresseur (101) est un compresseur moyenne pression et le compresseur (102) est un compresseur haute pression. Le gaz utilisé (10) dans le système et le procédé est de l'air ambiant, contenant une saturation en eau liée à sa température et sa pression.

Durant la phase de stockage d'énergie, l'air est comprimé dans la ligne de compression (1) puis envoyé dans un moyen de stockage d'air comprimé (1000) adapté aux hautes pressions. Ce moyen de stockage d'air comprimé (1000) peut être une cavité naturelle telle qu'une cavité saline, une ancienne mine ou un aquifère ou encore un stockage artificiel.

Des moyens de stockage et de récupération de la chaleur (200, 201, 202) sont disposés après chaque compresseur (100, 101, 102) afin de refroidir l'air comprimé chaud en sortie de compression tout en stockant cette énergie thermique. L'échange/stockage s'effectue par contact direct entre l'air et le matériau permettant de stocker la chaleur de l'air. Ce matériau peut être des pierres, du béton, des graviers ou tout autre matériaux solides adaptés. Les moyens de stockage et de récupération de la chaleur (200, 201, 202) sont adaptés à la pression de l'air entrant cédant son énergie à chacun d'entre eux. Le moyen de stockage et de récupération de la chaleur (200) est adapté à la basse pression, le moyen de stockage et de récupération de la chaleur (201) est adapté à la moyenne pression, et le moyen de stockage et de récupération de la chaleur (202) est adapté à la haute pression.

Une fois l'air refroidi et avant l'étage de compression suivant, l'eau condensée (i. e. le liquide présent dans l'air), issue de l'humidité de l'air, est extraite de la ligne de compression par des séparateurs gaz-liquide (400, 401, 402) afin d'avoir en entrée de compresseur ou du moyen de stockage de gaz comprimé (1000) un air sans aucune trace d'eau liquide. Cette condensation de l'eau peut avoir lieu dans les moyens de stockage et de récupération de la chaleur (200, 201, 202). L'eau condensée à chaque étage de compression est envoyée dans des moyens de stockage du liquide (500, 501, 502), qui résistent chacun à la pression à laquelle l'eau est extraite de l'air, en d'autres termes le moyen de stockage de liquide (500) est adapté à la basse pression, le moyen de stockage de liquide (501) est adapté à la moyenne pression, et le moyen de stockage de liquide (502) est adapté à la haute pression.

Durant la phase de production d'énergie, l'air comprimé traverse la ligne de détente (2), qui comporte trois étages de détente (4). L'air est détendu via un ou plusieurs moyens de détente, par exemple des turbines (700, 701, 702), placés dans chaque étage de détente (4), afin de produire de l'électricité via des alternateurs, non représentés. La turbine (702) est une turbine basse pression, la turbine (701) est une turbine moyenne pression, et la turbine (700) est une turbine haute pression.

En première étape de chaque étage de détente (4), l'eau condensée issue des moyens de stockage de liquide (500, 501, 502) est réinjectée à l'air comprimé de même niveau de pression via des mélangeurs (600, 601, 602). Le mélange air comprimé/eau condensée est réchauffé, avant l'entrée dans la turbine, par les moyens de stockage et de récupération de la chaleur (200, 201, 202), chargés thermiquement lors de la phase de compression précédente (1). L'eau condensée réinjectée à chaque étage de détente est évaporée et l'air réchauffé. Il n'y a donc pas d'eau liquide en entrée de turbines (700, 701, 702), ce qui est préférable pour le bon fonctionnement de celles-ci, et le débit de passage plus important dû à la réinjection d'eau, et la température élevée en entrée des turbines (700, 701, 702) assure un meilleur rendement du procédé.

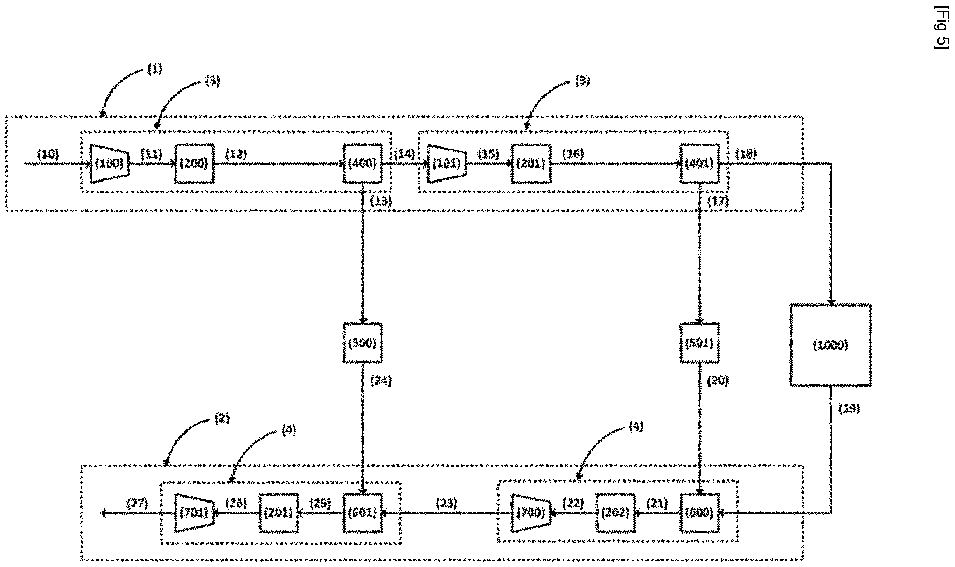

La figure 5 illustre, schématiquement et de manière non limitative, un système et un procédé de stockage et de récupération d'énergie par gaz comprimé (en l'occurrence l'air) selon un quatrième mode de réalisation de l'invention. Le quatrième mode de réalisation diffère du troisième mode de réalisation par le nombre d'étages de compression et le nombre d'étages de détente. Pour ce mode de réalisation, la ligne de compression (1) comprend deux étages de compression (3) et la ligne de détente (2) comprend deux étages de détente (4).

Le troisième mode de réalisation peut également être modifié en ajoutant des étages de compression et/ou des étages de détente.

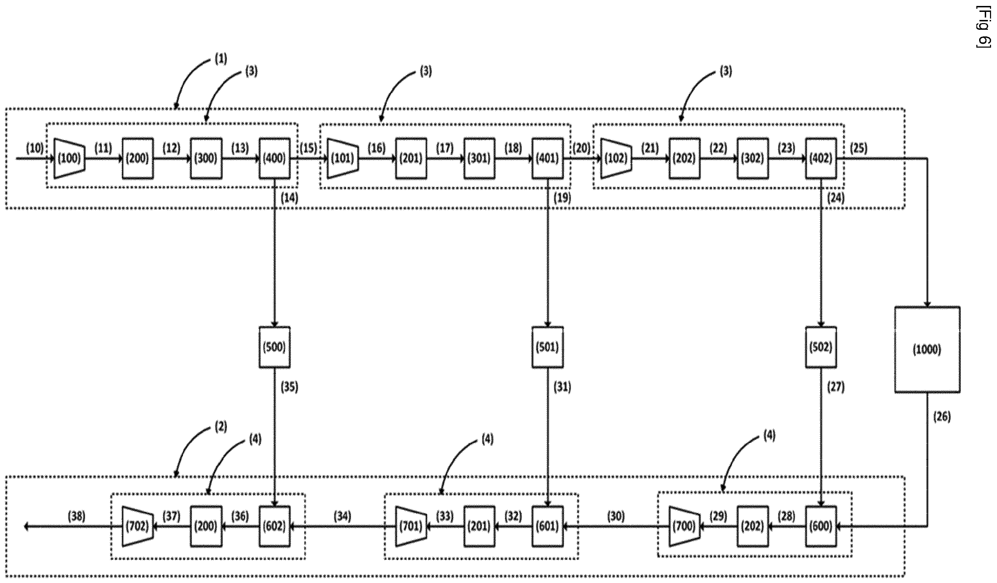

La figure 6 illustre, schématiquement et de manière non limitative, un système et un procédé de stockage et de récupération d'énergie par gaz comprimé (en l'occurrence l'air) selon un cinquième mode de réalisation de l'invention. Le cinquième mode de réalisation correspond au troisième mode de réalisation pour lequel des moyens de refroidissement (300, 301, 302) ont été ajoutés dans la ligne de compression (1). Par conséquent, seule la ligne de compression (1) est décrite pour ce mode de réalisation.

Selon le cinquième mode de réalisation, le procédé et le système se composent d'une ligne de compression (1), incluant trois étages de compression (3) en fonction de la pression de l'air à atteindre. Chaque étage de compression (3) comprend un moyen de compression (100, 101, 102) appelé aussi compresseur. Ces compresseurs (100, 101, 102) peuvent être axiaux, centrifuges, ou de tout autre technologie. Le compresseur (100) est un compresseur basse pression, le compresseur (101) est un compresseur moyenne pression et le compresseur (102) est un compresseur haute pression. Le gaz comprimé (10) dans le système et le procédé est de l'air ambiant, contenant une saturation en eau liée à sa température et sa pression.

Durant la phase de stockage d'énergie, l'air est comprimé dans la ligne de compression (1) puis envoyé dans un moyen de stockage d'air comprimé (1000) adapté aux hautes pressions. Ce moyen de stockage d'air comprimé (1000) peut être une cavité naturelle telle qu'une cavité saline, une ancienne mine ou un aquifère ou encore un stockage artificiel.

Des moyens de stockage et de récupération de la chaleur (200, 201, 202) sont disposés après chaque compresseur ou étage de compression (100, 101, 102) afin de refroidir l'air comprimé chaud en sortie de compression tout en stockant cette énergie thermique. L'échange/stockage s'effectue par contact direct entre l'air et le matériau permettant de stocker la chaleur de l'air. Ce matériau peut être des pierres, du béton, des graviers ou tout autre matériaux solides adaptés. Les moyens de stockage et de récupération de la chaleur (200, 201, 202) sont adaptés à la pression de l'air entrant cédant son énergie à chacun d'entre eux. Le moyen de stockage et de récupération de la chaleur (200) est adapté à la basse pression, le moyen de stockage et de récupération de la chaleur (201) est adapté à la moyenne pression, et le moyen de stockage et de récupération de la chaleur (202) est adapté à la haute pression. Des moyens de refroidissement (300, 301, 302) peuvent être disposés à la suite des moyens de stockage et de récupération de la chaleur (200, 201, 202) si nécessaire afin de finir le refroidissement de l'air comprimé avant le prochain étage de compression ou avant son stockage. Ces moyens de refroidissement (300, 301, 302) peuvent être des aéro-réfrigérants ou des échangeurs de chaleur (tubes/calandre, à plaques, spiralés ou autres technologies adaptées) échangeant avec un fluide caloporteur pouvant être de l'eau, du propane, du butane ou tout autre réfrigérant adapté au refroidissement nécessaire. Les moyens de refroidissement (300, 301, 302) sont adaptés à la pression de l'air entrant et échangeant avec chacun d'entre eux. Le moyen de refroidissement (300) est adapté à la basse pression, le moyen de refroidissement (301) est adapté à la moyenne pression et le moyen de refroidissement (302) est adapté à la haute pression.

Une fois l'air refroidi et avant l'étage de compression suivant, l'eau condensée (i.e. le liquide présent dans l'air), issue de l'humidité de l'air, est extraite de la ligne de compression par des séparateurs gaz-liquide (400, 401, 402) afin d'avoir en entrée de compresseur ou du moyen de stockage de gaz comprimé (1000) un air sans aucune trace d'eau liquide. Cette condensation de l'eau peut avoir lieu dans les moyens de stockage et de récupération de la chaleur (200, 201, 202) et/ou dans les moyens de refroidissement (300, 301, 302). L'eau condensée à chaque étage de compression est envoyée dans des moyens de stockage du liquide (500, 501, 502), qui résistent chacun à la pression à laquelle l'eau est extraite de l'air, en d'autres termes le moyen de stockage de liquide (500) est adapté à la basse pression, le moyen de stockage de liquide (501) est adapté à la moyenne pression, et le moyen de stockage de liquide (502) est adapté à la haute pression.

Le cinquième mode de réalisation peut également être modifié en adaptant le nombre des étages de compression et/ou des étages de détente.

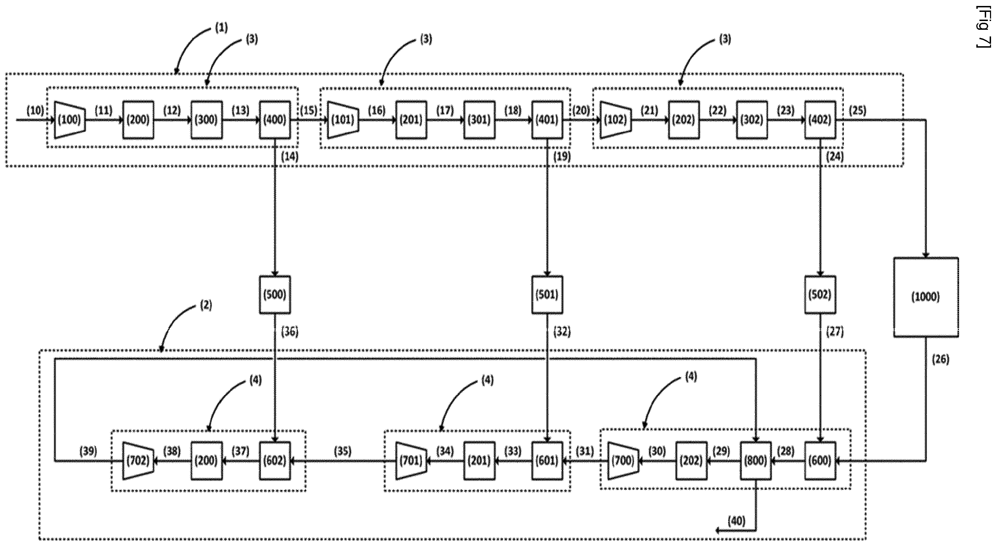

La figure 7 illustre, schématiquement et de manière non limitative, un système et un procédé de stockage et de récupération d'énergie par gaz comprimé (en l'occurrence l'air) selon un sixième mode de réalisation de l'invention. Le sixième mode de réalisation correspond au cinquième mode de réalisation, pour lequel un échangeur de chaleur complémentaire (800) est prévu dans la ligne de détente (2), entre l'air en sortie et le gaz comprimé. Par conséquent, seule la ligne de détente (2) est décrite pour ce mode de réalisation.

Durant la phase de production d'énergie, l'air comprimé traverse la ligne de détente (2), qui comporte trois étages de détente (4). L'air est détendu via un ou plusieurs moyens de détente, par exemple des turbines (700, 701, 702), placés dans chaque étage de détente (4), afin de produire de l'électricité via des alternateurs, non représentés. La turbine (702) est une turbine basse pression, la turbine (701) est une turbine moyenne pression et la turbine (700) est une turbine haute pression.

En première étape de chaque étage de détente (4), l'eau condensée issue des moyens de stockage de liquide (500, 501, 502) est réinjectée à l'air comprimé de même niveau de pression via des mélangeurs (600, 601, 602). Le mélange air comprimé/eau condensée est réchauffé, avant l'entrée dans la turbine, par les moyens de stockage et de récupération de la chaleur (200, 201, 202), chargés thermiquement à la phase de compression précédente (1). L'eau condensée réinjectée à chaque étape de détente (4) est évaporée et l'air réchauffé. Il n'y a donc pas d'eau liquide en entrée de turbines (700, 701, 702), ce qui est préférable pour le bon fonctionnement de celles-ci. De plus, le débit de passage plus important dû à la réinjection d'eau, et la température élevée de la ligne de détente (2) en entrée des turbines (700, 701, 702) assure un meilleur rendement du procédé.

La chaleur de l'air issu de l'air sortant de la turbine basse pression (700) est utilisée afin de réchauffer l'air issu du moyen de stockage de gaz comprimé (1000) et mélangé à l'eau de condensation (28) via un moyen d'échange de chaleur complémentaire (800). Pour ce mode de réalisation, le moyen d'échange de chaleur complémentaire (800) est agencé dans le premier étage de détente (4) de la ligne de détente (2). De plus, le moyen d'échange de chaleur complémentaire (800) est agencé entre le mélangeur (600) et le moyen de stockage et de récupération de la chaleur (202). Ce moyen d'échange de chaleur complémentaire (800) peut être de type tubes/calandre, à plaques, spiralés ou toute autre technologie adaptée.

Le sixième mode de réalisation peut également être modifié en adaptant le nombre des étages de compression et/ou des étages de détente.

De plus, la ligne de compression (1) peut être également conforme au mode de réalisation de la figure 4, c'est-à-dire sans moyen de refroidissement (300, 301, 302).

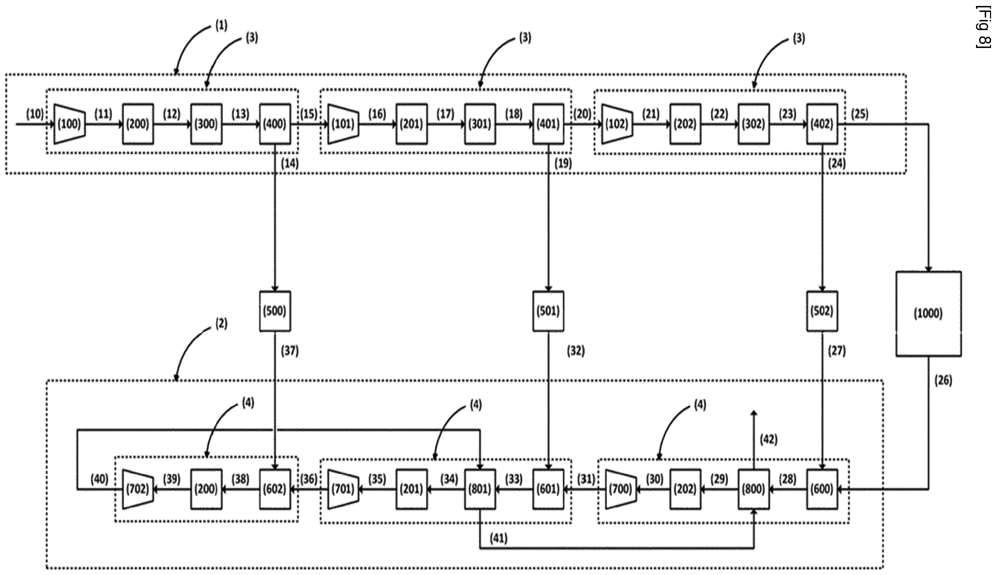

La figure 8 illustre, schématiquement et de manière non limitative, un système et un procédé de stockage et de récupération d'énergie par gaz comprimé (en l'occurrence l'air) selon un septième mode de réalisation de l'invention. Le septième mode de réalisation correspond au cinquième mode de réalisation, pour lequel deux échangeurs de chaleur complémentaires (800, 801) sont prévus dans la ligne de détente (2), entre l'air en sortie et le gaz comprimé. Par conséquent, seule la ligne détente (2) est décrite pour ce mode de réalisation.

Durant la phase de production d'énergie, l'air comprimé traverse la ligne de détente (2), qui comporte trois étages de détente (4). L'air est détendu via un ou plusieurs moyens de détente, par exemple des turbines (700, 701, 702), placés dans chaque étage de détente (4), afin de produire de l'électricité via des alternateurs, non représentés. La turbine (702) est une turbine basse pression, la turbine (701) est une turbine moyenne pression et la turbine (700) est une turbine haute pression.

En première étape de chaque étage de détente (4), l'eau condensée issue des moyens de stockage de liquide (500, 501, 502) est réinjectée à l'air comprimé de même niveau de pression via des mélangeurs (600, 601, 602). Le mélange air comprimé/eau condensée est réchauffé, avant l'entrée dans la turbine, par les moyens de stockage et de récupération de la chaleur (200, 201, 202), chargés thermiquement à la phase de compression précédente (1). L'eau condensée réinjectée à chaque étape de détente est évaporée et l'air réchauffé. Il n'y a donc pas d'eau liquide en entrée de turbines (700, 701, 702), ce qui est préférable pour le bon fonctionnement de celles-ci. De plus, le débit de passage est plus important dû à la réinjection d'eau, et la température élevée de la ligne de détente (2) en entrée des turbines (700, 701, 702) assure un meilleur rendement du procédé.

La chaleur de l'air issu de l'air sortant de la turbine basse pression (700) est utilisée afin de réchauffer l'air issu du moyen de stockage de gaz comprimé (1000) et mélangé à l'eau de condensation (28) via un moyen d'échange de chaleur complémentaire (800), ainsi que l'air issu du deuxième étage de détente et mélangé à l'eau de condensation (33) via un moyen d'échange de chaleur complémentaire (801). Pour ce mode de réalisation, les moyens d'échange de chaleur complémentaires (800, 801) sont agencés dans le premier étage de détente (4) et dans le deuxième étage de détente (4) de la ligne de détente (2). De plus, dans chaque étage de détente, le moyen d'échange de chaleur complémentaire (800, 801) est agencé entre le mélangeur (600, 601) et le moyen de stockage et de récupération de la chaleur (202, 201). Ces moyens d'échange de chaleur complémentaires (800, 801) peuvent être de type tubes/calandre, à plaques, spiralés ou toute autre technologie adaptée. Pour le mode de réalisation illustré, l'air (40) issu de la turbine (702) basse pression et possédant de la chaleur fatale préchauffe en série le flux (33) en amont du stockage d'énergie thermique moyenne pression (201) puis le flux (28) en amont du stockage d'énergie thermique haute pression (202).

Le septième mode de réalisation peut également être modifié en adaptant le nombre des étages de compression et/ou des étages de détente.

De plus, la ligne de compression peut être également conforme au mode de réalisation de la figure 4, c'est-à-dire sans moyen de refroidissement (300, 301, 302).

Comme il va de soi, l'invention ne se limite pas aux seules formes de réalisation du système et du procédé décrits ci-dessus à titre d'exemple, elle embrasse au contraire toutes les variantes de réalisation.

### Exemples comparatifs

Les caractéristiques et avantages du procédé selon l'invention apparaîtront plus clairement à la lecture des exemples application ci-après.

### Exemple n°1 - non conforme à l'invention

Cet exemple met en œuvre le système et le procédé illustré en figure 1 non conforme à l'invention.

Pendant la phase de compression (1), un flux d'air extérieur (10), à une pression de 1.02 bar (0.102 MPa) et une température de 27°C et possédant une humidité de 14.6 geau/kgair (gramme d'eau par kilogramme d'air), est comprimé par un compresseur basse pression (100) d'où il sort (11) à une température de 255°C et une pression de 6 bar (0.6 MPa). Ce flux (11) est envoyé vers un moyen de stockage et de récupération de la chaleur basse pression (200) qui refroidit l'air jusqu'à une température de 90°C (12) et stocke cette énergie thermique jusqu'à la phase de détente (2). Le flux (12) est refroidi une nouvelle fois par le moyen de refroidissement (300) jusqu'à atteindre une température de 50°C en sortie (13). Le flux (13) est alors composé d'air et d'eau, issue de l'humidité de l'air, condensée durant les phases de refroidissement en (200) et/ou (300). Cette eau condensée (14) est séparée de la ligne de compression (1) dans un séparateur gaz-liquide (400) opérant à la pression du flux (13). Le flux (15), de nouveau totalement gazeux, est comprimé par un compresseur moyenne pression (101) d'où il ressort (16) à une température de 275°C et une pression de 28 bar (2.8 MPa). Le flux (16) est envoyé vers un moyen de stockage et de récupération de la chaleur moyenne pression (201) qui refroidit l'air jusqu'à une température de 100°C (17) et stocke cette énergie thermique jusqu'à la phase de détente (2). Le flux (17) est refroidi une nouvelle fois par un moyen de refroidissement (301) jusqu'à atteindre une température de 50°C en sortie (18). Le flux (18) est alors composé d'air et d'eau, issue de l'humidité de l'air, condensée durant les phases de refroidissement en (201) et/ou (301). Cette eau condensée (19) est séparée de la ligne de compression (1) dans un séparateur gaz-liquide (401) opérant à la pression du flux (18). Le flux (20), de nouveau totalement gazeux, est comprimé par un compresseur haute pression (102) d'où il ressort (21) à une température de 250°C et une pression de 117 bar (11.7 MPa). Le flux (21) est envoyé vers un moyen de stockage et de récupération de la chaleur haute pression (202) qui refroidit l'air jusqu'à une température de 45°C (22) et stocke cette énergie thermique jusqu'à la phase de détente (2). Le flux (22) est refroidi une nouvelle fois par un moyen de refroidissement (302) jusqu'à atteindre une température de 30°C en sortie (23), 30°C étant la température de stockage de l'air. Le flux (23) est alors composé d'air et d'eau, issue de l'humidité de l'air, condensée durant les phases de refroidissement en (202) et/ou (302). Cette eau condensée (24) est séparée de la ligne de compression (1) dans un séparateur gaz-liquide (402) opérant à la pression du flux (23).

Le flux d'air comprimé à une pression de 117 bar (11.7 MPa) et une température de 30°C (25) est alors envoyé vers le moyen de stockage d'air comprimé (1000) en attendant la phase de récupération de l'énergie (2).

Lorsque l'on veut produire de l'électricité, le flux d'air comprimé (26) à une pression de 117 bar (11.7 MPa) et une température de 30°C, sortant du moyen de stockage d'air comprimé (1000) est réchauffé dans le moyen de stockage et de récupération de la chaleur haute pression (202) qui libère la chaleur stockée durant la phase de compression (1) jusqu'à ce que le flux (27) atteigne une température de 240°C. Ce flux d'air chaud et comprimé (27) est détendu dans la turbine haute pression (702) produisant de l'électricité via un alternateur, jusqu'à atteindre en sortie (28) une pression de 28 bar (2.8 MPa) et une température de 85°C. Le flux (28) est réchauffé dans le moyen de stockage et de récupération de la chaleur moyenne pression (201) qui libère la chaleur stockée durant la phase de compression (1) jusqu'à ce que le flux (29) atteigne une température de 265°C. Ce flux d'air chaud et comprimé (29) est détendu dans la turbine moyenne pression (701) produisant de l'électricité via un alternateur, jusqu'à atteindre en sortie (30) une pression de 5 bar (0.5 MPa) et une température de 75°C. Le flux (30) est réchauffé dans le moyen de stockage et de récupération de la chaleur basse pression (200) qui libère la chaleur stockée durant la phase de compression (1) jusqu'à ce que le flux (31) atteigne une température de 245°C. Ce flux d'air chaud et comprimé (31) est détendu dans la turbine basse pression (700) produisant de l'électricité via un alternateur, jusqu'à atteindre en sortie (32) une pression de 1.02 bar (0.102 MPa) et une température de 80°C.

Le rendement du procédé de stockage d'énergie de l'exemple 1 est de 69.6% pour une puissance consommée de 100 MW aux compresseurs. Le débit total d'eau condensée aux trois étages de compression est de 7.5 t/h. La puissance de stockage thermique est de 87 MWth (MW thermique) et la puissance de refroidissement nécessaire est de 20.5 MWth.

### Exemple n°2 selon l'invention

Cet exemple met en œuvre le système et le procédé selon le mode de réalisation de l'invention illustré en figure 3.

Pendant la phase de compression (1), un flux d'air sec (10), à une pression de 1.02 bar (0.102 MPa) et une température de 27°C et ne possédant aucune trace d'eau, est comprimé par un compresseur basse pression (100) d'où il sort (11) à une température de 260°C et une pression de 6 bar (0.6 MPa). Ce flux (11) est envoyé vers un moyen de stockage et de récupération de la chaleur basse pression (200) qui refroidit l'air jusqu'à une température de 60°C (12) et stocke cette énergie thermique jusqu'à la phase de détente (2). Le flux (12) est refroidi une nouvelle fois par un moyen de refroidissement (300) jusqu'à atteindre une température de 50°C en sortie (13). Le flux (13) est comprimé par un compresseur moyenne pression (101) d'où il ressort (14) à une température de 275°C et une pression de 28 bar (2.8 MPa). Le flux (14) est envoyé vers un moyen de stockage et de récupération de la chaleur moyenne pression (201) qui refroidit l'air jusqu'à une température de 80°C (15) et stocke cette énergie thermique jusqu'à la phase de détente (2). Le flux (15) est refroidi une nouvelle fois par un moyen de refroidissement (301) jusqu'à atteindre une température de 50°C en sortie (16). Ce flux (16) est comprimé par un compresseur haute pression (102) d'où il ressort (17) à une température de 250°C et une pression de 117 bar (11.7 MPa). Le flux (17) est envoyé vers un moyen de stockage et de récupération de la chaleur haute pression (202) qui refroidit l'air jusqu'à une température de 40°C (18) et stocke cette énergie thermique jusqu'à la phase de détente (2). Le flux (18) est refroidi une nouvelle fois par un moyen de refroidissement (302) jusqu'à atteindre une température de 30°C en sortie (19), 30°C étant la température de stockage de l'air.

Le flux d'air comprimé à une pression de 117 bar (11.7 MPa) et une température de 30°C (19) est alors envoyé vers un moyen de stockage d'air comprimé (1000) en attendant la phase de récupération d'énergie (2).

Lorsque l'on veut produire de l'électricité, un flux optimisé d'eau liquide (21) à une pression de 117 bar (11.7 MPa) et une température de 30°C est injecté dans le flux d'air comprimé (20) sortant du stockage (1000) via le mélangeur (600) pour former le flux (22). Le flux (22) est réchauffé dans le moyen de stockage et de récupération de la chaleur haute pression (202) qui libère la chaleur stockée durant la phase de compression (1) jusqu'à ce que le flux (23) atteigne une température de 240°C. Ce flux d'air chaud et comprimé (23) est détendu dans la turbine haute pression (700) produisant de l'électricité via un alternateur, jusqu'à atteindre en sortie (24) une pression de 28 bar (2.8 MPa) et une température de 85°C. Un flux optimisé d'eau liquide (25) à une pression de 28 bar (2.8 MPa) et une température de 50°C est injecté dans le flux d'air comprimé (24) via le mélangeur (601) pour former le flux (26). Le flux (26) est réchauffé dans le moyen de stockage et de récupération de la chaleur moyenne pression (201) qui libère la chaleur stockée durant la phase de compression (1) jusqu'à ce que le flux (27) atteigne une température de 265°C. Ce flux d'air chaud et comprimé (27) est détendu dans la turbine moyenne pression (701) produisant de l'électricité via un alternateur, jusqu'à atteindre en sortie (28) une pression de 5 bar (0.5 MPa) et une température de 75°C. Un flux optimisé d'eau liquide (29) à une pression de 6 bar (0.6 MPa) et une température de 50°C est injecté dans le flux d'air comprimé (28) via le mélangeur (600) pour former le flux (30). Le flux (30) est réchauffé dans le moyen de stockage et de récupération de la chaleur basse pression (200) qui libère la chaleur stockée durant la phase de compression (1) jusqu'à ce que le flux (31) atteigne une température de 245°C. Ce flux d'air chaud et comprimé (31) est détendu dans la turbine basse pression (702) produisant de l'électricité via un alternateur, jusqu'à atteindre en sortie (32) une pression de 1.02 bar (0.102 MPa) et une température de 80°C.

Le rendement du procédé de stockage d'énergie est de 71.6% pour une puissance consommée de 100 MW aux compresseurs. Le débit total d'eau liquide injectée aux trois étages de détente est de 9.1 t/h. La puissance de stockage thermique est de 94.6 MWth et la puissance de refroidissement nécessaire est de 8.0 MWth.

L'injection d'eau permet donc par augmentation du débit de passage dans les turbines en détente d'améliorer le rendement du procédé de plus de 2% par rapport à l'exemple 1 non conforme à l'invention et de réduire la puissance de refroidissement.

### Exemple n°3 selon l'invention

Cet exemple met en œuvre le système et le procédé selon le mode de réalisation de l'invention illustré en figure 6.

Pendant la phase de compression (1), un flux d'air extérieur (10), à une pression de 1.02 bar (0.102 MPa) et une température de 27°C et possédant une humidité de 14.6 geau/kgair, est comprimé par un compresseur basse pression (100) d'où il sort (11) à une température de 255°C et une pression de 6 bar (0.6 MPa). Ce flux (11) est envoyé vers un moyen de stockage et de récupération de la chaleur basse pression (200) qui refroidit l'air jusqu'à une température de 80°C (12) et stocke cette énergie thermique jusqu'à la phase de détente (2). Le flux (12) est refroidi une nouvelle fois par un moyen de refroidissement (300) jusqu'à atteindre une température de 50°C en sortie (13). Le flux (13) est alors composé d'air et d'eau, issue de l'humidité de l'air, condensée durant les phases de refroidissement en (200) et/ou (300). Cette eau condensée (14) est séparée du flux de la ligne de compression (1) dans un séparateur gaz-liquide (400), opérant à la pression du flux (13), puis envoyée vers un moyen de stockage de liquide (500) sous une pression maintenue de 6 bar (0.6 MPa). Le flux (15), de nouveau totalement gazeux, est comprimé par un compresseur moyenne pression (101) d'où il ressort (16) à une température de 275°C et une pression de 28 bar (2.8 MPa). Le flux (16) est envoyé vers un moyen de stockage et de récupération de la chaleur moyenne pression (201) qui refroidit l'air jusqu'à une température de 80°C (17) et stocke cette énergie thermique jusqu'à la phase de détente (2). Le flux (17) est refroidi une nouvelle fois par un moyen de refroidissement (301) jusqu'à atteindre une température de 50°C en sortie (18). Le flux (18) est alors composé d'air et d'eau, issue de l'humidité de l'air, condensée durant les phases de refroidissement en (201) et/ou (301). Cette eau condensée (19) est séparée du flux de la ligne de compression (1) dans un séparateur gaz-liquide (401), opérant à la pression du flux (18), puis envoyée vers un moyen de stockage de liquide (501) sous une pression maintenue de 28 bar (2.8 MPa). Le flux (20), de nouveau totalement gazeux, est comprimé par un compresseur haute pression (102) d'où il ressort (21) à une température de 250°C et une pression de 117 bar (11.7 MPa). Le flux (21) est envoyé vers un moyen de stockage et de récupération de la chaleur haute pression (202) qui refroidit l'air jusqu'à une température de 40°C (22) et stocke cette énergie thermique jusqu'à la phase de détente (2). Le flux (22) est refroidi une nouvelle fois par un moyen de refroidissement (302) jusqu'à atteindre une température de 30°C en sortie (23), 30°C étant la température de stockage de l'air. Le flux (23) est alors composé d'air et d'eau, issue de l'humidité de l'air, condensée durant les phases de refroidissement en (202) et/ou (302). Cette eau condensée (24) est séparée du flux de la ligne de compression (1) dans un séparateur gaz-liquide (402), opérant à la pression du flux (23), puis envoyée vers un moyen de stockage de liquide (502) sous une pression maintenue de 117 bar (11.7 MPa).

Le flux d'air comprimé à une pression de 117 bar (11.7 MPa) et une température de 30°C (25) est alors envoyé vers le moyen de stockage d'air comprimé (1000) en attendant la phase de récupération d'énergie (2).

Lorsque l'on veut produire de l'électricité, un flux d'eau condensée (27) provenant du moyen de stockage de liquide (502) à une pression de 117 bar (11.7 MPa) et une température de 30°C est réinjecté dans le flux d'air comprimé (26) sortant du moyen de stockage d'air comprimé (1000) via le mélangeur (600) pour former le flux (28). Le flux (28) est réchauffé dans le moyen de stockage et de récupération de la chaleur haute pression (202) qui libère la chaleur stockée durant la phase de compression jusqu'à ce que le flux (28) atteigne une température de 240°C. Ce flux d'air chaud et comprimé (29) est détendu dans la turbine haute pression (700) produisant de l'électricité via un alternateur, jusqu'à atteindre en sortie (30) une pression de 28 bar (2.8 MPa) et une température de 85°C. Un flux d'eau condensée (31) provenant du moyen de stockage de liquide (501) à une pression de 28 bar (2.8 MPa) et une température de 50°C est réinjecté dans le flux d'air comprimé (30) via le mélangeur (601) pour former le flux (32). Le flux (32) est réchauffé dans le moyen de stockage et de récupération de la chaleur moyenne pression (201) qui libère la chaleur stockée durant la phase de compression jusqu'à ce que le flux (33) atteigne une température de 255°C. Ce flux d'air chaud et comprimé (33) est détendu dans la turbine moyenne pression (701) produisant de l'électricité via un alternateur, jusqu'à atteindre en sortie (34) une pression de 5 bar (0.5 MPa) et une température de 70°C. Un flux d'eau condensée (35) provenant du moyen de stockage de liquide (500) à une pression de 6 bar (0.6 MPa) et une température de 50°C est réinjecté dans le flux d'air comprimé (34) via le mélangeur (600) pour former le flux (36). Le flux (36) est réchauffé dans le moyen de stockage et de récupération de la chaleur basse pression (200) qui libère la chaleur stockée durant la phase de compression jusqu'à ce que le flux (37) atteigne une température de 245°C. Ce flux d'air chaud et comprimé (37) est détendu dans la turbine basse pression (702) produisant de l'électricité via un alternateur, jusqu'à atteindre en sortie (38) une pression de 1.02 bar (0.102 MPa) et une température de 80°C.

Le rendement du procédé de stockage d'énergie est de 70.4% pour une puissance consommée de 100 MW aux compresseurs. Le débit total d'eau condensée aux trois étages de compression est de 7.5 t/h. La puissance de stockage thermique est de 93 MWth et la puissance de refroidissement nécessaire est de 14.6 MWth.

La réinjection des eaux de condensation permet donc par augmentation du débit de passage dans les turbines en détente d'améliorer le rendement du procédé de près de 1% par rapport à l'exemple 1 non conforme à l'invention et de réduire la puissance nécessaire au refroidissement d'environ 30%.

### Exemple n°4 selon l'invention

Cet exemple met en œuvre le système et le procédé selon le mode de réalisation de l'invention illustré en figure 7.

Pendant la phase de compression (1), un flux d'air extérieur (10), à une pression de 1.02 bar (0.102 MPa) et une température de 27°C et possédant une humidité de 14.6 geau/kgair, est comprimé par un compresseur basse pression (100) d'où il sort (11) à une température de 255°C et une pression de 6 bar (0.6 MPa). Ce flux (11) est envoyé vers un moyen de stockage et de récupération de la chaleur basse pression (200) qui refroidit l'air jusqu'à une température de 80°C (12) et stocke cette énergie thermique jusqu'à la phase de détente (2). Le flux (12) est refroidi une nouvelle fois par le moyen de refroidissement (300) jusqu'à atteindre une température de 50°C en sortie (13). Le flux (13) est alors composé d'air et d'eau, issue de l'humidité de l'air, condensée durant les phases de refroidissement en (200) et/ou (300). Cette eau condensée (14) est séparée du flux de la ligne de compression (1) dans un séparateur gaz-liquide (400), opérant à la pression du flux (13), puis envoyée vers un moyen de stockage de liquide (500) sous une pression maintenue de 6 bar (0.6 MPa). Le flux (15), de nouveau totalement gazeux, est comprimé par un compresseur moyenne pression (101) d'où il ressort (16) à une température de 275°C et une pression de 28 bar (2.8 MPa). Le flux (16) est envoyé vers un moyen de stockage et de récupération de la chaleur moyenne pression (201) qui refroidit l'air jusqu'à une température de 82°C (17) et stocke cette énergie thermique jusqu'à la phase de détente (2). Le flux (17) est refroidi une nouvelle fois par un moyen de refroidissement (301) jusqu'à atteindre une température de 50°C en sortie (18). Le flux (18) est alors composé d'air et d'eau, issue de l'humidité de l'air, condensée durant les phases de refroidissement en (201) et/ou (301). Cette eau condensée (19) est séparée du flux d'air (20) dans un séparateur gaz-liquide (401), opérant à la pression du flux (18), puis envoyée vers un moyen de stockage du liquide (501) sous une pression maintenue de 28 bar (2.8 MPa). Le flux (20), de nouveau totalement gazeux, est comprimé par un compresseur haute pression (102) d'où il ressort (21) à une température de 250°C et une pression de 117 bar (11.7 MPa). Le flux (21) est envoyé vers un moyen de stockage et de récupération de la chaleur haute pression (202) qui refroidit l'air jusqu'à une température de 80°C (22) et stocke cette énergie thermique jusqu'à la phase de détente (2). Le flux (22) est refroidi une nouvelle fois par un moyen de refroidissement (302) jusqu'à atteindre une température de 30°C en sortie (23), 30°C étant la température de stockage de l'air. Le flux (23) est alors composé d'air et d'eau, issue de l'humidité de l'air, condensée durant les phases de refroidissement en (202) et/ou (302). Cette eau condensée (24) est séparée du flux d'air (25) dans un séparateur gaz-liquide (402), opérant à la pression du flux (23), puis envoyée vers un moyen de stockage du liquide (502) sous une pression maintenue de 117 bar (11.7 MPa).

Le flux d'air comprimé à une pression de 117 bar (11.7 MPa) et une température de 30°C (25) est alors envoyé vers le moyen de stockage d'air comprimé (1000) en attendant la phase de récupération d'énergie (2).

Lorsque l'on veut produire de l'électricité, un flux d'eau condensée (27) provenant du moyen de stockage de liquide (502) à une pression de 117 bar (11.7 MPa) et une température de 30°C est réinjecté dans le flux d'air comprimé (26) sortant du moyen de stockage d'air comprimé (1000) via le mélangeur (600) pour former le flux (28). Le flux (28) est préchauffé dans un échangeur de chaleur complémentaire (800) afin d'atteindre en sortie (29) une température de 70°C. Le flux (29) est alors réchauffé dans le moyen de stockage et de récupération de la chaleur haute pression (202) qui libère la chaleur stockée durant la phase de compression jusqu'à ce que le flux (30) atteigne une température de 240°C. Ce flux d'air chaud et comprimé (30) est détendu dans la turbine haute pression (700) produisant de l'électricité via un alternateur, jusqu'à atteindre en sortie (31) une pression de 28 bar (2.8 MPa) et une température de 85°C. Un flux d'eau condensée (32) provenant du moyen de stockage de liquide (501) à une pression de 28 bar (2.8 MPa) et une température de 50°C est réinjecté dans le flux d'air comprimé (31) via le mélangeur (601) pour former le flux (33). Le flux (33) est réchauffé dans le moyen de stockage et de récupération de la chaleur moyenne pression (201) qui libère la chaleur stockée durant la phase de compression jusqu'à ce que le flux (34) atteigne une température de 255°C. Ce flux d'air chaud et comprimé (34) est détendu dans la turbine moyenne pression (701) produisant de l'électricité via un alternateur, jusqu'à atteindre en sortie (35) une pression de 5 bar (0.5 MPa) et une température de 70°C. Un flux d'eau condensée (36) provenant du moyen de stockage de liquide (500) à une pression de 6 bar (0.6 MPa) et une température de 50°C est réinjecté dans le flux d'air comprimé (35) via le mélangeur (602) pour former le flux (37). Le flux (37) est réchauffé dans le moyen de stockage et de récupération de la chaleur basse pression (200) qui libère la chaleur stockée durant la phase de compression jusqu'à ce que le flux (38) atteigne une température de 245°C. Ce flux d'air chaud et comprimé (38) est détendu dans la turbine basse pression (702) produisant de l'électricité via un alternateur, jusqu'à atteindre en sortie (39) une pression de 1.02 bar (0.102 MPa) et une température de 80°C. Ce flux (39) est alors envoyé à l'échangeur de chaleur (800) afin de céder son énergie au flux (28). Le flux résultant (40) sort de l'échangeur à 35°C.

Le rendement du procédé de stockage d'énergie est de 70.2% pour une puissance consommée de 100.0 MW aux compresseurs. Le débit total d'eau condensée aux trois étages de compression est de 7.5 t/h. La puissance de stockage thermique est de 85.7 MWth et la puissance de refroidissement nécessaire est de 21.8 MWth. Cette configuration permet également de diminuer la taille du moyen de stockage et de récupération de la chaleur haute pression de 21% par rapport à l'exemple n°1.

### Exemple n°5 selon l'invention

Cet exemple met en œuvre le système et le procédé selon le mode de réalisation de l'invention illustré en figure 8. De la même manière que pour l'exemple n°3, on détermine les conditions opératoires et le rendement.

Le rendement du système et du procédé de stockage d'énergie est de 70.0% pour une puissance consommée de 100.0 MW aux compresseurs. Le débit total d'eau condensée aux trois étages de compression est de 7.5 t/h. La puissance de stockage thermique est de 85.7 MWth et la puissance de refroidissement nécessaire est de 21.8 MWth. Cette configuration permet également de diminuer la taille du moyen de stockage et de récupération de la chaleur haute pression (202) de 18% et la taille du moyen de stockage et de récupération de la chaleur moyenne pression (201) de 3% par rapport à l'exemple n° 3. Cette configuration permet de diminuer la taille du moyen de stockage et de récupération de la chaleur haute pression (202) de 16% par rapport à l'exemple n° 1.

Ainsi, les exemples 2 à 4 montrent que le système et le procédé selon l'invention permettent d'augmenter les performances du procédé, tout en limitant la puissance nécessaire au refroidissement, et, pour certains modes de réalisation, en limitant la taille des moyens de stockage et de récupération de la chaleur.

## Revendications

1. Système de stockage et de récupération d'énergie par gaz comprimé comprenant :
- Une ligne de compression (1) de gaz avec au moins deux étages de compression (3) successifs, chaque étage de compression (3) comprenant un moyen de compression (100, 101, 102) et un moyen de stockage et de récupération de la chaleur (200, 201, 202) agencé en aval dudit moyen de compression (100, 101, 102), dans le sens de circulation dudit gaz,
- Au moins un moyen de stockage de gaz comprimé (1000) agencé en sortie de ladite ligne de compression de gaz (1) pour stocker ledit gaz comprimé,
- Une ligne de détente de gaz (2) pour détendre ledit gaz comprimé stocké dans ledit moyen de stockage de gaz comprimé (1000), ladite ligne de détente de gaz (2) comprenant au moins deux étages de détente (4) successifs, chaque étage de détente (4) comportant un moyen de détente (700, 701, 702) et des conduites configurées pour faire circuler ledit gaz comprimé dans au moins un desdits moyens de stockage et de récupération de la chaleur (200, 201, 202) desdits étages de compression (3) de manière à réchauffer ledit gaz comprimé,
**caractérisé en ce que** lesdits moyens de stockage et de récupération de la chaleur (200, 201, 202) comprennent des particules de stockage de la chaleur pour un échange de chaleur direct entre le gaz et le matériau des particules de stockage de la chaleur, les particules restant dans le moyen de stockage et de récupération de la chaleur, et **en ce que** chaque étage de détente (4) comprend un moyen d'introduction d'un liquide (600, 601, 602), lesdits moyens d'introduction dudit liquide (600, 601, 602) étant prévus en amont, dans le sens de circulation dudit gaz, desdits moyens de stockage de la chaleur (200, 201, 202).

2. Système selon la revendication 1, dans lequel chaque étage de compression (3) comprend un moyen de séparation dudit gaz et d'un liquide (400, 401, 402).

3. Système selon la revendication 2, dans lequel, pour chaque étage de compression, ledit moyen de séparation de gaz et de liquide (400, 401, 402) est agencé en aval dudit moyen de stockage et de récupération de la chaleur (200, 201, 202), dans le sens de circulation dudit gaz.

4. Système selon l'une des revendications 2 ou 3, dans lequel ledit système comprend une pluralité de moyens de stockage de liquide (500, 501, 502) pour stocker ledit liquide en sortie desdits moyens de séparation de gaz et de liquide (400, 401, 402), et en ce que lesdits moyens introduction (600, 601, 602) introduisent ledit liquide desdits moyens de stockage de liquide (500, 501, 502).

5. Système selon l'une des revendications précédentes, dans lequel ladite ligne de compression (1) comprend autant d'étages de compression (3) que la ligne de détente (2) comprend d'étages de détente (4), chaque moyen de stockage et de récupération de la chaleur (200, 201, 202) d'un étage de compression (3) étant utilisé dans l'étage de détente (4) correspondant.

6. Système selon la revendication 5, dans lequel ladite ligne de compression (1) et ladite ligne de détente (2) comportent respectivement trois étages.

7. Système selon l'une des revendications précédentes, dans lequel au moins un étage de compression (3) comprend un moyen de refroidissement (300, 301, 302) en aval du moyen de stockage et de récupération de la chaleur (200, 201, 202), dans le sens de circulation dudit gaz, de préférence, ledit moyen de refroidissement (300, 301, 302) comprend un aéro-réfrigérant.

8. Système selon l'une des revendications précédentes, dans lequel ladite ligne de détente comprend au moins un moyen d'échange de chaleur complémentaire (800, 801) entre le gaz en sortie de ladite ligne de détente et ledit gaz comprimé.

9. Système selon la revendication 8, dans lequel ledit au moins un moyen d'échange de chaleur complémentaire (800, 801) est agencé dans le premier étage de détente, dans le sens de circulation dudit gaz.

10. Système selon l'une des revendications 8 ou 9, dans lequel ladite ligne de détente (2) comporte deux moyens d'échange de chaleur complémentaires (800, 801) agencés dans deux étages de détente.

11. Système selon l'une des revendications 8 à 10, dans lequel ledit au moins un moyen d'échange de chaleur complémentaire (800, 801) est agencé entre ledit moyen d'introduction dudit liquide (600, 601, 602) et ledit moyen de stockage et de récupération de la chaleur (200, 201, 202), dans le sens de circulation dudit gaz.

12. Procédé de stockage et de récupération d'énergie par gaz comprimé comprenant au moins les étapes suivantes :
- En phase de stockage d'énergie :
a) on comprime successivement au moins deux fois un gaz dans une ligne de compression (1) comprenant au moins deux étages de compression (3), chaque étage de compression (3) comprenant au moins un moyen de compression (100, 101, 102) ;
b) après chaque étape de compression, on récupère la chaleur dudit gaz comprimé dans au moins un moyen de stockage et de récupération de la chaleur (200, 201, 202)
c) on stocke ledit gaz comprimé refroidi dans au moins un moyen de stockage de gaz comprimé (1000) ;
- En phase de récupération d'énergie :
d) on fait circuler le gaz comprimé sortant du moyen de stockage de gaz comprimé (1000) dans une ligne de détente (2) comprenant au moins deux étages de détente (4) successifs, et dans chaque étage de détente (4), on réchauffe le gaz comprimé en le faisant circuler dans un desdits moyens de stockage et de récupération de la chaleur (200, 201, 202) grâce à la chaleur stockée lors de l'étape de compression puis on détend le gaz comprimé réchauffé dans un moyen de détente (700, 701, 702) ;
**caractérisé en ce qu'**on stocke la chaleur dans des particules de stockage de la chaleur, par un échange de chaleur direct entre le gaz et le matériau des particules de stockage de la chaleur, les particules restant dans le moyen de stockage et de récupération de la chaleur et **en ce qu'**avant chaque étape de détente, on introduit un liquide dans ledit gaz comprimé avant l'étape de réchauffage dudit gaz.

13. Procédé selon la revendication 12, dans lequel après chaque étape de compression, on sépare ledit gaz et un liquide présent dans ledit gaz.

14. Procédé selon la revendication 13, dans lequel on stocke ledit liquide séparé, et ledit liquide introduit dans ledit gaz comprimé est ledit liquide stocké.

15. Procédé selon l'une des revendication 12 à 14, dans lequel on réalise autant d'étapes de compression que d'étapes de détente, et on utilise le moyen de stockage et de récupération de la chaleur (200, 201, 202) de chacune des étapes b) pour réchauffer le gaz comprimé de l'étape de détente correspondante.

16. Procédé selon l'une des revendications 12 à 15, dans lequel après chaque étape de récupération de la chaleur, on refroidit le gaz comprimé en sortie du moyen de stockage et de récupération de la chaleur (200, 201, 202) dans un moyen de refroidissement (300, 301, 302) avant que le gaz ne soit envoyé dans l'étape de compression suivante ou dans le moyen de stockage de gaz comprimé (1000).

17. Procédé selon l'une des revendications 12 à 16, dans lequel avant au moins une étape de détente, on réchauffe ledit gaz par au moins un échange de chaleur complémentaire avec ledit gaz en sortie de ladite ligne de détente.

18. Procédé selon la revendication 17, dans lequel ledit au moins un échange de chaleur complémentaire est mis en œuvre pour la première étape de détente, dans le sens de circulation dudit gaz.

19. Procédé selon l'une des revendications 17 ou 18, dans lequel on met en œuvre deux échanges de chaleur complémentaires pour deux étapes de détente.

20. Procédé selon l'une des revendications 17 à 19, dans lequel on met en œuvre ledit échange de chaleur complémentaire après l'étape d'introduction dudit liquide stocké dans ledit gaz comprimé.

## Patentansprüche

1. System zur Speicherung und Rückgewinnung von Energie unter Verwendung von Druckgas, welches umfasst:
- eine Gaskompressionslinie (1) mit mindestens zwei aufeinander folgenden Kompressionsstufen (3), wobei jede Kompressionsstufe (3) ein Kompressionsmittel (100, 101, 102) und ein Wärmespeicher- und -rückgewinnungsmittel (200, 201, 202), das in Strömungsrichtung des Gases stromabwärts des Kompressionsmittels (100, 101, 102) angeordnet ist, umfasst,
- mindestens ein Druckgasspeichermittel (1000), das am Ausgang der Gaskompressionslinie (1) angeordnet ist, um das Druckgas zu speichern,
- eine Gasentspannungslinie (2) zum Entspannen des in dem Druckgasspeichermittel (1000) gespeicherten Druckgases, wobei diese Entspannungslinie (2) mindestens zwei aufeinander folgende Entspannungsstufen (4) umfasst, wobei jede Entspannungsstufe (4) ein Entspannungsmittel (700, 701, 702) und Leitungen, die dafür ausgelegt sind, das Druckgas in mindestens einem der Wärmespeicher- und -rückgewinnungsmittel (200, 201, 202) der Kompressionsstufen (3) zirkulieren zu lassen, um so das Druckgas zu erwärmen, aufweist,
**dadurch gekennzeichnet, dass** die Wärmespeicher- und-rückgewinnungsmittel (200, 201, 202) Partikel zur Wärmespeicherung für einen direkten Wärmeaustausch zwischen dem Gas und dem Material der Partikel zur Wärmespeicherung umfassen, wobei die Partikel in dem Wärmespeicher- und -rückgewinnungsmittel verbleiben, und dadurch, dass jede Entspannungsstufe (4) ein Mittel zur Einleitung einer Flüssigkeit (600, 601, 602) umfasst, wobei diese Mittel zur Einleitung der Flüssigkeit (600, 601, 602) in Strömungsrichtung des Gases stromaufwärts der Wärmespeichermittel (200, 201, 202) vorgesehen sind.

2. System nach Anspruch 1, wobei jede Kompressionsstufe (3) ein Mittel zur Trennung des Gases und einer Flüssigkeit (400, 401, 402) umfasst.

3. System nach Anspruch 2, wobei für jede Kompressionsstufe das Mittel zur Trennung von Gas und Flüssigkeit (400, 401, 402) in Strömungsrichtung des Gases stromabwärts des Wärmespeicher- und - rückgewinnungsmittels (200, 201, 202) angeordnet ist.

4. System nach einem der Ansprüche 2 oder 3, **dadurch gekennzeichnet, dass** das System mehrere Flüssigkeitsspeichermittel (500, 501, 502) zum Speichern der Flüssigkeit am Ausgang der Mittel zur Trennung von Gas und Flüssigkeit (400, 401, 402) umfasst, und dadurch, dass die Einleitungsmittel (600, 601, 602) die Flüssigkeit der Flüssigkeitsspeichermittel (500, 501, 502) einleiten.

5. System nach einem der vorhergehenden Ansprüche, wobei die Kompressionslinie (1) ebenso viele Kompressionsstufen (3) umfasst, wie die Entspannungslinie (2) Entspannungsstufen (4) umfasst, wobei jedes Wärmespeicher- und -rückgewinnungsmittel (200, 201, 202) einer Kompressionsstufe (3) in der entsprechenden Entspannungsstufe (4) verwendet wird.

6. System nach Anspruch 5, wobei die Kompressionslinie (1) und die Entspannungslinie (2) jeweils drei Stufen aufweisen.

7. System nach einem der vorhergehenden Ansprüche, wobei mindestens eine Kompressionsstufe (3) ein Kühlmittel (300, 301, 302) umfasst, in Strömungsrichtung des Gases stromabwärts des Wärmespeicher- und - rückgewinnungsmittels (200, 201, 202), wobei das Kühlmittel (300, 301, 302) vorzugsweise einen Rückkühler umfasst.

8. System nach einem der vorhergehenden Ansprüche, wobei die Entspannungslinie mindestens ein komplementäres Wärmetauschmittel (800, 801) zwischen dem Gas am Ausgang der Entspannungslinie und dem Druckgas umfasst.

9. System nach Anspruch 8, wobei das mindestens eine komplementäre Wärmetauschmittel (800, 801) in der in Strömungsrichtung des Gases ersten Entspannungsstufe angeordnet ist.

10. System nach einem der Ansprüche 8 oder 9, wobei die Entspannungslinie (2) zwei komplementäre Wärmetauschmittel (800, 801) aufweist, die in zwei Entspannungsstufen angeordnet sind.

11. System nach einem der Ansprüche 8 bis 10, wobei das mindestens eine komplementäre Wärmetauschmittel (800, 801) in Strömungsrichtung des Gases zwischen dem Mittel zur Einleitung der Flüssigkeit (600, 601, 602) und dem Wärmespeicher- und -rückgewinnungsmittel (200, 201, 202) angeordnet ist.

12. Verfahren zur Speicherung und Rückgewinnung von Energie unter Verwendung von Druckgas, welches mindestens die folgenden Schritte umfasst:
- In der Energiespeicherungsphase:
a) Es wird mindestens zweimal nacheinander ein Gas in einer Kompressionslinie (1) komprimiert, die mindestens zwei Kompressionsstufen (3) umfasst, wobei jede Kompressionsstufe (3) mindestens ein Kompressionsmittel (100, 101, 102) umfasst;
b) nach jedem Kompressionsschritt wird die Wärme des Druckgases in mindestens einem Wärmespeicher- und - rückgewinnungsmittel (200, 201, 202) rückgewonnen;
c) das gekühlte Druckgas wird in mindestens einem Druckgasspeichermittel (1000) gespeichert;
- in der Energierückgewinnungsphase:
d) Das aus dem Druckgasspeichermittel (1000) ausströmende Druckgas wird in einer Entspannungslinie (2) zirkulieren gelassen, die mindestens zwei aufeinander folgende Entspannungsstufen (4) umfasst, und in jeder Entspannungsstufe (4) wird das Druckgas, indem es in einem der Wärmespeicher- und -rückgewinnungsmittel (200, 201, 202) zirkulieren gelassen wird, dank der im Kompressionsschritt gespeicherten Wärme erwärmt, danach wird das erwärmte Druckgas in einem Entspannungsmittel (700, 701, 702) entspannt;
**dadurch gekennzeichnet, dass** die Wärme in Partikeln zur Wärmespeicherung durch einen direkten Wärmeaustausch zwischen dem Gas und dem Material der Partikel zur Wärmespeicherung gespeichert wird, wobei die Partikel in dem Wärmespeicher- und -rückgewinnungsmittel verbleiben, und dadurch, dass vor jedem Entspannungsschritt eine Flüssigkeit in das Druckgas vor dem Schritt der Erwärmung dieses Gases eingeleitet wird.

13. Verfahren nach Anspruch 12, wobei nach jedem Kompressionsschritt das Gas und eine im Gas vorhandene Flüssigkeit getrennt werden.

14. Verfahren nach Anspruch 13, wobei die abgetrennte Flüssigkeit gespeichert wird und die Flüssigkeit, die in das Druckgas eingeleitet wird, die gespeicherte Flüssigkeit ist.

15. Verfahren nach einem der Ansprüche 12 bis 14, wobei ebenso viele Kompressionsschritte wie Entspannungsschritte durchgeführt werden und das Wärmespeicher- und -rückgewinnungsmittel (200, 201, 202) jedes der Schritte b) verwendet wird, um das Druckgas des entsprechenden Entspannungsschritts zu erwärmen.

16. Verfahren nach einem der Ansprüche 12 bis 15, wobei nach jedem Schritt der Rückgewinnung der Wärme das Druckgas am Ausgang des Wärmespeicher- und - rückgewinnungsmittels (200, 201, 202) in einem Kühlmittel (300, 301, 302) gekühlt wird, bevor das Gas dem folgenden Kompressionsschritt zugeführt oder in das Druckgasspeichermittel (1000) geleitet wird.

17. Verfahren nach einem der Ansprüche 12 bis 16, wobei vor mindestens einem Entspannungsschritt das Gas durch mindestens einen komplementären Wärmeaustausch mit dem Gas am Ausgang der Entspannungslinie erwärmt wird.

18. Verfahren nach Anspruch 17, wobei der mindestens eine komplementäre Wärmeaustausch für den in Strömungsrichtung des Gases ersten Entspannungsschritt durchgeführt wird.

19. Verfahren nach einem der Ansprüche 17 oder 18, wobei zwei komplementäre Wärmeaustausche für zwei Entspannungsschritte durchgeführt werden.

20. Verfahren nach einem der Ansprüche 17 bis 19, wobei der komplementäre Wärmeaustausch nach dem Schritt der Einleitung der gespeicherten Flüssigkeit in das Druckgas durchgeführt wird.

## Claims

1. A compressed-gas energy storage and recovery system comprising:
- a gas compression line (1) with at least two successive compression stages (3), each compression stage (3) comprising a compression means (100, 101, 102) and a heat storage and recovery means (200, 201, 202) arranged downstream from said compression means (100, 101, 102), in the direction of flow of said gas,
- at least one compressed gas storage means (1000) arranged at the outlet of said gas compression line (1) for storing said compressed gas,
- a gas expansion line (2) for expanding said compressed gas stored in said compressed gas storage means (1000), said gas expansion line (2) comprising at least two successive expansion stages (4), each expansion stage (4) comprising an expansion means (700, 701, 702) and pipes configured to circulate said compressed gas in at least one of said heat storage and recovery means (200, 201, 202) of said compression stages (3) so as to heat said compressed gas,
**characterized in that** said heat storage and recovery means (200, 201, 202) comprise heat storage particles for direct heat exchange between the gas and the heat storage particle material, with the particles remaining in the heat storage and recovery means,
and each expansion stage (4) comprises a liquid delivery means (600, 601, 602), said means (600, 601, 602) of delivering said liquid being provided upstream, in the direction of flow of said gas, from said heat storage means (200, 201, 202).

2. A system as claimed in claim 1, wherein each compression stage (3) comprises a means of separating said gas and a liquid (400, 401, 402).

3. A system as claimed in claim 2 wherein, for each compression stage, said gas/liquid separation means (400, 401, 402) is arranged downstream from said heat storage and recovery means (200, 201, 202), in the direction of flow of said gas.

4. A system as claimed in any one of claims 2 or 3, wherein said system comprises a plurality of liquid storage means (500, 501, 502) for storing said liquid at the outlet of said gas/liquid separation means (400, 401, 402), and said delivery means (600, 601, 602) deliver said liquid of said liquid storage means (500, 501, 502).

5. A system as claimed in any one of the previous claims, wherein said compression line (1) comprises as many compression stages (3) as expansion line (2) comprises expansion stages (4), each heat storage and recovery means (200, 201, 202) of a compression stage (3) being used in the corresponding expansion stage (4).

6. A system as claimed in claim 5, wherein said compression line (1) and said expansion line (2) comprise three stages respectively.

7. A system as claimed in any one of the previous claims, wherein at least one compression stage (3) comprises a cooling means (300, 301, 302) downstream from heat storage and recovery means (200, 201, 202), in the direction of flow of said gas, preferably, said cooling means (300, 301, 302) comprises an air cooler.

8. A system as claimed in any one of the previous claims, wherein said expansion line comprises at least one additional heat exchange means (800, 801) between the gas at the outlet of said expansion line and said compressed gas.

9. A system as claimed in claim 8, wherein said at least one additional heat exchange means (800, 801) is arranged in the first expansion stage, in the direction of flow of said gas.

10. A system as claimed in any one of claims 8 or 9, wherein said expansion line (2) comprises two additional heat exchange means (800, 801) arranged in two expansion stages.

11. A system as claimed in any one of claims 8 to 10, wherein said at least one additional heat exchange means (800, 801) is arranged between said delivery means (600, 601, 602) for said liquid and said heat storage and recovery means (200, 201, 202), in the direction of flow of said gas.

12. A compressed-gas energy storage and recovery method comprising at least the following steps:
- in energy storage phase:
a) successively compressing at least twice a gas in a compression line (1) comprising at least two compression stages (3), each compression stage (3) comprising at least one compression means (100, 101, 102),
b) after each compression step, recovering the heat of said compressed gas in at least one heat storage and recovery means (200, 201, 202),
c) storing said cooled compressed gas in at least one compressed gas storage means (1000),
- in energy recovery phase:
d) circulating the compressed gas leaving compressed gas storage means (1000) in an expansion line (2) comprising at least two successive expansion stages (4), and in each expansion stage (4), heating the compressed gas by circulating it in one of said heat storage and recovery means (200, 201, 202) using the heat stored during the compression step, then expanding the heated compressed gas in an expansion means (700, 701, 702),
**characterized in that** the heat is stored in heat storage particles by direct heat exchange between the gas and the heat storage particle material, the particles remaining in the heat storage and recovery means,
and before each expansion step, a liquid is fed into said compressed gas prior to the step of heating said gas.

13. A method as claimed in claim 12 wherein, after each compression step, said gas and a liquid present in said gas are separated.

14. A method as claimed in claim 13, wherein said separated liquid is stored, and said liquid fed into said compressed gas is said stored liquid.

15. A method as claimed in any one of claims 12 to 14, wherein as many compression steps as there are expansion steps are carried out, and means (200, 201, 202) for storing and recovering the heat in each step b) is used for heating the compressed gas of the corresponding expansion step.

16. A method as claimed in any one of claims 12 to 15 wherein, after each heat recovery step, the compressed gas at the outlet of heat storage and recovery means (200, 201, 202) is cooled in a cooling means (300, 301, 302) prior to sending the gas to the next compression step or to compressed gas storage means (1000).

17. A method as claimed in any one of claims 12 to 16 wherein, prior to at least one expansion step, said gas is heated by at least one additional heat exchange with said gas at the outlet of said expansion line.

18. A method as claimed in claim 17, wherein said at least one additional heat exchange is carried out for the first expansion step, in the direction of flow of said gas.

19. A method as claimed in any one of claims 17 or 18, wherein two additional heat exchanges are carried out for two expansion steps.

20. A method as claimed in any one of claims 17 to 19, wherein said additional heat exchange is carried out after the step of feeding said stored liquid into said compressed gas.
